(19)

Europäisches Patentamt

European Patent Office

Office européen des brevets

(11) **EP 4 769 989 A2**

(12) **EUROPEAN PATENT APPLICATION**

(43) Date of publication:
**01.07.2026 Bulletin 2026/27**

(21) Application number: **26157532.8**

(22) Date of filing: **09.08.2019**

(51) International Patent Classification (IPC):
***H04L 1/1829*** (2023.01)

(52) Cooperative Patent Classification (CPC):
**H04B 7/2125; H04L 1/1854;** H04L 5/0055;
H04L 5/0057

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2018 US 201862717536 P**

(62) Document number(s) of the earlier application(s) in
accordance with Art. 76 EPC:
**19773922.0 / 3 834 309**

(71) Applicant: **Telefonaktiebolaget LM Ericsson
(publ)
164 83 Stockholm (SE)**

(72) Inventors:
• **MURUGANATHAN, Siva
Stittsville, Ontario K2S 0R3 (CA)**
• **GAO, Shiwei
Nepean, Ontario K2J 0H5 (CA)**

• **LIN, Xingqin
Santa Clara, CA 95054 (US)**
• **MÄÄTTÄNEN, Helka-Liina
00510 Helsinki (FI)**
• **ZOU, Zhenhua
171 42 Solna (SE)**

(74) Representative: **Röthinger, Rainer
Wuesthoff & Wuesthoff
Patentanwälte und Rechtsanwalt PartG mbB
Schweigerstrasse 2
81541 München (DE)**

Remarks:
•This application was filed on 10-02-2026 as a
divisional application to the application mentioned
under INID code 62.
•Claims filed after the date of filing of the application /
after the date of receipt of the divisional application
(Rule 68(4) EPC).

(54) **SYSTEMS AND METHODS FOR UPLINK TRANSMISSION TIMING**

(57) Systems and methods for uplink transmission timing are provided. In some embodiments, a method of operation of a wireless device in a cellular communications network includes receiving a transmission, from a network node, in a downlink slot; determining a reference uplink slot index in an uplink frame timing of the wireless device where the reference uplink slot index corresponds to the downlink slot in which the transmission was received; and transmitting an uplink transmission in response to the received transmission in an uplink slot a number of slots, K, after the determined reference uplink slot index. This may enable transmission in satellite radio access networks by establishing the transmission timing relationships that are suitable for long propagation delays and the large differential delay in a spotbeam in satellite communications systems that may range from sub-milliseconds to tens of milliseconds.

*FIG. 8*

EP 4 769 989 A2

**Description**

Related Applications

This application claims the benefit of provisional patent application serial number 62/717,536, filed August 10, 2018, the disclosure of which is hereby incorporated herein by reference in its entirety.

Technical Field

The present disclosure relates to uplink transmission timing in communications networks, especially with higher round-trip delay.

Background

There is an ongoing resurgence of satellite communications. Several plans for satellite networks have been announced in the past few years. The target services vary, from backhaul and fixed wireless, to transportation, to outdoor mobile, to Internet of Things (IoT). Satellite networks could complement mobile networks on the ground by providing connectivity to underserved areas and multicast/broadcast services.

To benefit from the strong mobile ecosystem and economy of scale, adapting the terrestrial wireless access technologies including Long Term Evolution (LTE) and New Radio (NR) for satellite networks is drawing significant interest. For example, the Third Generation Partnership Project (3GPP) completed an initial study in Release 15 on adapting NR to support non-terrestrial networks (mainly satellite networks) (See, 3GPP TR 38.811 V1.0.0 (2018-06), Study on New Radio (NR) to support non-terrestrial networks). This initial study focused on the channel model for the non-terrestrial networks, defining deployment scenarios, and identifying the key potential impacts. 3GPP is conducting a follow-up study item in Release 16 on solutions evaluation for NR to support non-terrestrial networks (See, RP-181370, Study on solutions evaluation for NR to support non-terrestrial Network).

There currently exist certain challenges. In NR Release 15, the timing relationships of Uplink Control Information (UCI) transmission in NR Physical Uplink Control Channels (PUCCHs) and Physical Uplink Shared Channels (PUSCHs) and of uplink data transmissions in PUSCHs are designed to be suitable for terrestrial radio propagation environment where the round-trip delay is usually in the order of 1 ms. As a result, the existing uplink transmission timing relationships are not suitable for long propagation delays such as in satellite communications systems that range from tens of milliseconds (e.g., Low Earth Orbit (LEO)) to hundreds of milliseconds (e.g., Geostationary Orbit (GEO)), and the large differential delay in a spotbeam in satellite communications systems that may range from sub-milliseconds to tens of milliseconds (depending on the size of spotbeam).

As such, there is a need for improved uplink transmission timing, especially with higher round-trip delay.

Summary

Systems and methods for uplink transmission timing are provided. In some embodiments, a method of operation of a wireless device in a cellular communications network includes receiving a transmission from a network node in a downlink slot; determining a reference uplink slot index in an uplink frame timing of the wireless device where the reference uplink slot index corresponds to the downlink slot in which the transmission was received; and transmitting an uplink transmission in response to the received transmission in an uplink slot a number of slots, K, after the determined reference uplink slot index. This may enable Uplink Control Information (UCI) transmission in New Radio (NR) Physical Uplink Control Channels (PUCCHs) and Physical Uplink Shared Channels (PUSCHs) and uplink data transmission in PUSCHs in satellite radio access networks by establishing the UCI transmission timing relationships that are suitable for long propagation delays in satellite communications systems that range from tens of milliseconds (LEO) to hundreds of milliseconds (GEO), and the large differential delay in a spotbeam in satellite communications systems that may range from sub-milliseconds to tens of milliseconds.

In some embodiments, determining the reference uplink slot index comprises, when a boundary of the downlink slot is aligned with an uplink slot, determining the reference uplink slot index to be an index of that uplink slot. In some embodiments, determining the reference uplink slot index comprises, when the boundary of the downlink slot is partially aligned with a first uplink slot and a second uplink slot, determining the reference uplink slot index to be an index of the second uplink slot. In some embodiments, determining the reference uplink slot index comprises, when the boundary of the downlink slot is partially aligned with a first uplink slot and a second uplink slot, determining the reference uplink slot index to be an index of the first uplink slot. In some embodiments, determining the reference uplink slot index comprises, when the boundary of the downlink slot is partially aligned with a first uplink slot and a second uplink slot, determining the reference uplink slot index to be an index of whichever of the first uplink slot and the second uplink slot has more overlap with the downlink slot.

In some embodiments, receiving the transmission comprises receiving a Physical Downlink Shared Channel (PDSCH) transmission and transmitting the uplink transmission comprises transmitting a Hybrid Automatic Repeat Request (HARQ) response to the PDSCH transmission. In some embodiments, the number of slots, K, is received from a control message from the network node. In some embodiments, the network node is a NR gNB. In some embodiments, the wireless device is a NR User Equipment (UE).

In some embodiments, a method of operation of a network node in a cellular communications network includes transmitting a transmission to a wireless device in a downlink slot and receiving an uplink transmission in response to the transmission in an uplink slot a number of slots, K, after a reference uplink slot index where the reference uplink slot index in an uplink frame timing of the wireless device corresponds to the downlink slot in which the transmission was received by the wireless device.

In some embodiments, when a boundary of the downlink slot is aligned with an uplink slot, the reference uplink slot index is an index of that uplink slot.

In some embodiments, when the boundary of the downlink slot is partially aligned with a first uplink slot and a second uplink slot, the reference uplink slot index is an index of the second uplink slot.

In some embodiments, when the boundary of the downlink slot is partially aligned with a first uplink slot and a second uplink slot, the reference uplink slot index is an index of the first uplink slot. In some embodiments, when the boundary of the downlink slot is partially aligned with a first uplink slot and a second uplink slot, the reference uplink slot index is an index of whichever of the first uplink slot and the second uplink slot has more overlap with the downlink slot.

In some embodiments, transmitting the transmission comprises transmitting a PDSCH transmission and receiving the uplink transmission comprises receiving a HARQ response to the PDSCH transmission.

In some embodiments, the number of slots, K, is transmitted from the network node as a control message. In some embodiments, the network node is a NR gNB. In some embodiments, the wireless device is a NR UE.

In some embodiments, a wireless device in a cellular communications network includes at least one transmitter; at least one receiver; at least one processor; and memory storing software instructions executable by the at least one processor whereby the wireless device is operative to: receive a transmission from a network node in a downlink slot; determine a reference uplink slot index in an uplink frame timing of the wireless device where the reference uplink slot index corresponds to the downlink slot in which the transmission was received; and transmit an uplink transmission in response to the received transmission in an uplink slot a number of slots, K, after the determined reference uplink slot index.

In some embodiments, a network node in a cellular communications network includes at least one transmitter; at least one receiver; at least one processor; and memory storing software instructions executable by the at least one processor whereby the network node is operative to: transmit a transmission to a wireless device in a downlink slot; and receive an uplink transmission in response to the transmission in an uplink slot a number of slots, K, after a reference uplink slot index where the reference uplink slot index in an uplink frame timing of the wireless device corresponds to the downlink slot in which the transmission was received by the wireless device.

In some embodiments, a method of operation of a wireless device in a cellular communications network includes receiving a transmission from a network node in a downlink slot; performing a time shift of an uplink frame timing with respect to a downlink frame time wherein the time shift takes into account at least a part of a round trip delay; and performing an uplink transmission using the time shift of the uplink frame timing.

In some embodiments, the uplink frame timing at the wireless device is time advanced from the downlink frame time at the wireless device by an offset value in addition to a timing advance. In some embodiments, the downlink frame time and the uplink frame timing at the network node are time aligned.

In some embodiments, the method also includes receiving the offset value, from the network node, which, optionally, consists of at least one of the group consisting of: a one-way delay, a round-trip delay, the one-way delay quantized to the closest number of slots, and the round-trip delay quantized to the closest number of slots.

In some embodiments, the method also includes receiving a broadcast, from the network node, indicating the offset value which, optionally, consists of a common round-trip delay.

Certain aspects of the present disclosure and their embodiments may provide solutions to the aforementioned or other challenges. In some embodiments, a method of uplink transmission timing determination in a wireless device is provided when the round trip delay between the wireless device and a network node exceeds 2 ms. The method includes at least one of the wireless devise performing a time shift of its uplink frame timing with respect to its downlink frame time wherein the timing shift takes into account at least a part or the whole of the round trip delay, or the network node performing a time shift of its uplink frame timing with respect to its downlink frame time wherein the timing shift takes into account at least a part or the whole of the round trip delay. In some embodiments, the method also includes the wireless device determining the uplink data or control information transmission timing taking into account the round trip delay.

There are, proposed herein, various embodiments which address one or more of the issues disclosed herein. In some embodiments, the wireless device receives from the network a higher layer configuration parameter that represents the at least a part or the whole of the round trip delay.

In some embodiments, the base station is part of a satellite radio access network comprising a satellite and a gateway that communicatively couples the base station to the satellite.

In some embodiments, the wireless device determines the uplink transmission timing of HARQ-Acknowledgement (ACK) jointly using the higher layer configuration parameter and a timing offset indicator (i.e., PDSCH-to-HARQ-timing-indicator field) received in Downlink Control Information (DCI) that triggers the PDSCH corresponding to the HARQ-ACK transmission.

In some embodiments, the wireless device determines the uplink transmission timing of HARQ-ACK jointly using the higher layer configuration parameter and a second higher layer configuration parameter (dl-DataToUL-ACK).

In some embodiments, the wireless device determines the uplink transmission timing of aperiodic Channel State Information (CSI) on PUSCH jointly using the higher layer configuration parameter and a report slot offset indicator (which indicates of the values from higher layer parameter reportSlotOffsetList) received in the DCI that triggers the aperiodic CSI on PUSCH.

In some embodiments, the wireless device determines the uplink transmission timing of data on PUSCH jointly using the higher layer configuration parameter and a report slot offset indicator received in the DCI that triggers the data transmission on PUSCH.

In some embodiments, the wireless device determines a reference uplink timing slot as the slot that has the most overlap with a downlink slot in which DCI triggering data or control uplink transmission is received by the wireless device form the network node.

In some embodiments, the wireless device determines the uplink transmission timing of HARQ-ACK jointly using the determined reference uplink timing slot and a timing offset indicator (i.e., PDSCH-to-HARQ-timing-indicator field) received in the DCI that triggers the PDSCH corresponding to the HARQ-ACK transmission.

In some embodiments, the wireless device determines the uplink transmission timing of HARQ-ACK jointly using the determined reference uplink timing slot and a second higher layer configuration parameter (dl-DataToUL-ACK).

In some embodiments, the wireless device determines the uplink transmission timing of aperiodic CSI on PUSCH jointly using the determined reference uplink timing slot and a report slot offset indicator (which indicates of the values from higher layer parameter reportSlotOffsetList) received in the DCI that triggers the aperiodic CSI on PUSCH.

In some embodiments, the wireless device determines the uplink transmission timing of data on PUSCH jointly using the determined reference uplink timing slot and a report slot offset indicator received in the DCI that triggers the data transmission on PUSCH.

Certain embodiments may provide one or more of the following technical advantage(s). The proposed solution enables UCI transmission in NR PUCCH and PUSCH and uplink data transmission in PUSCH in satellite radio access networks by establishing the UCI transmission timing relationships that are suitable for long propagation delays in satellite communications systems that range from tens of milliseconds (LEO) to hundreds of milliseconds (GEO), and the large differential delay in a spotbeam in satellite communications systems that may range from sub-milliseconds to tens of milliseconds.

Brief Description of the Drawings

The accompanying drawing figures incorporated in and forming a part of this specification illustrate several aspects of the disclosure, and together with the description serve to explain the principles of the disclosure.

Figure 1 shows an example architecture of a satellite network with bent pipe transponders, according to some embodiments of the present disclosure;

Figure 2 illustrates a typical trajectory of a Geostationary Orbit (GEO) satellite, according to some embodiments of the present disclosure;

Figure 3 illustrates a typical New Radio (NR) User Equipment (UE) uplink frame, according to some embodiments of the present disclosure;

Figure 4 illustrates an example configuration of Synchronization Signal (SS) blocks, SS bursts and SS burst sets/series, according to some embodiments of the present disclosure;

Figure 5 illustrates an example of time alignment with coarse Timing Alignment (TA) and fine TA, according to some embodiments of the present disclosure;

Figure 6 shows an example illustrating Hybrid Automatic Repeat Request (HARQ) timing, according to some embodiments of the present disclosure;

Figure 7 shows an example illustrating timing of an aperiodic Channel State Information (CSI) transmission, according to some embodiments of the present disclosure;

Figure 8 shows an example illustrating aperiodic CSI transmission timing, according to some embodiments of the present disclosure;

Figure 9 shows an example illustrating HARQ timing, according to some embodiments of the present disclosure;

Figure 10 is a schematic block diagram of a radio access node according to some embodiments of the present disclosure;

Figure 11 is a schematic block diagram that illustrates a virtualized embodiment of the radio access node of Figure 10 according to some embodiments of the present disclosure;

Figure 12 is a schematic block diagram of the radio access node of Figure 10 according to some other embodiments of the present disclosure;

Figure 13 is a schematic block diagram of a User Equipment device (UE) according to some embodiments of the present disclosure;

Figure 14 is a schematic block diagram of the UE of Figure 13 according to some other embodiments of the present disclosure;

Figure 15 illustrates a telecommunication network connected via an intermediate network to a host computer in accordance with some embodiments of the present disclosure;

Figure 16 is a generalized block diagram of a host computer communicating via a base station with a UE over a partially wireless connection in accordance with some embodiments of the present disclosure;

Figure 17 is a flowchart illustrating a method implemented in a communication system in accordance with one embodiment of the present disclosure;

Figure 18 is a flowchart illustrating a method implemented in a communication system in accordance with one embodiment of the present disclosure;

Figure 19 is a flowchart illustrating a method implemented in a communication system in accordance with one embodiment on the present disclosure; and

Figure 20 is a flowchart illustrating a method implemented in a communication system in accordance with one embodiment of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

Radio Node: As used herein, a "radio node" is either a radio access node or a wireless device.

Radio Access Node: As used herein, a "radio access node" or "radio network node" is any node in a radio access network of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), and a relay node.

Core Network Node: As used herein, a "core network node" is any type of node in a core network. Some examples of a core network node include, e.g., a Mobility Management Entity (MME), a Packet Data Network Gateway (P-GW), a Service Capability Exposure Function (SCEF), or the like.

Wireless Device: As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device.

Network Node: As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell;" however, particularly with respect to 5G NR concepts, beams may be used instead of cells and, as such, it is important to note that the concepts described herein are equally applicable to both cells and beams.

There is an ongoing resurgence of satellite communications. Several plans for satellite networks have been announced in the past few years. The target services vary, from backhaul and fixed wireless, to transportation, to outdoor mobile, to IoT (internet of things). Satellite networks could complement mobile networks on the ground by providing connectivity to underserved areas and multicast/broadcast services.

To benefit from the strong mobile ecosystem and economy of scale, adapting the terrestrial wireless access technologies including Long Term Evolution (LTE) and New Radio (NR) for satellite networks is drawing significant interest. For example, 3GPP completed an initial study in Release 15 on adapting NR to support non-terrestrial networks (mainly satellite networks) (See, 3GPP TR 38.811 V1.0.0 (2018-06), Study on New Radio (NR) to support non-terrestrial networks). This initial study focused on the channel model for the non-terrestrial networks, defining deployment scenarios, and identifying the key potential impacts. 3GPP is conducting a follow-up study item in Release 16 on solutions evaluation for NR to support non-terrestrial networks (See, RP-181370, Study on solutions evaluation for NR to support non-terrestrial Network).

Employing satellite radio access networks is an attractive way to complement the cellular networks on the ground to extend service to unserved areas such as aircrafts/vessels and to underserved sub-urban/rural areas.

A satellite radio access network usually includes the following components:

- Gateway that connects satellite network to core network
- Satellite that refers to a space-borne platform
- Terminal that refers to user equipment
- Feeder link that refers to the link between a gateway and a satellite
- Service link that refers to the link between a satellite and a terminal

The link from gateway to terminal is often called forward link, and the link from terminal to gateway is often called return link or access link. Depending on the functionality of the satellite in the system, we can consider two transponder options

- Bent pipe transponder: satellite forwards the received signal back to the earth with only amplification and a shift from uplink frequency to downlink frequency.
- Regenerative transponder: satellite includes on-board processing to demodulate and decode the received signal and regenerate the signal before sending it back to the earth.

Depending on the orbit altitude, a satellite may be categorized as a Low Earth Orbit (LEO), Medium Earth Orbit (MEO), or Geostationary Orbit (GEO) satellite.

- LEO: typical heights ranging from 500 - 1500 km, with orbital periods ranging from 10 - 40 mins.
- MEO: typical heights ranging from 5,000 - 12,000 km, with orbital periods ranging from 2 - 8 hours.
- GEO: height at 35,786 km, with an orbital period of 24 hours.

A satellite typically generates several beams over a given area. The footprint of a beam is usually in an elliptic shape, which has been traditionally considered as a cell. The footprint of a beam is also often referred to a spotbeam. The footprint of a spotbeam may move over the earth surface with the satellite movement or may be earth fixed with some beam pointing mechanism used by the satellite to compensate for its motion. The size of a spotbeam depends on the system design, which may range from tens of kilometers to a few thousands of kilometers.

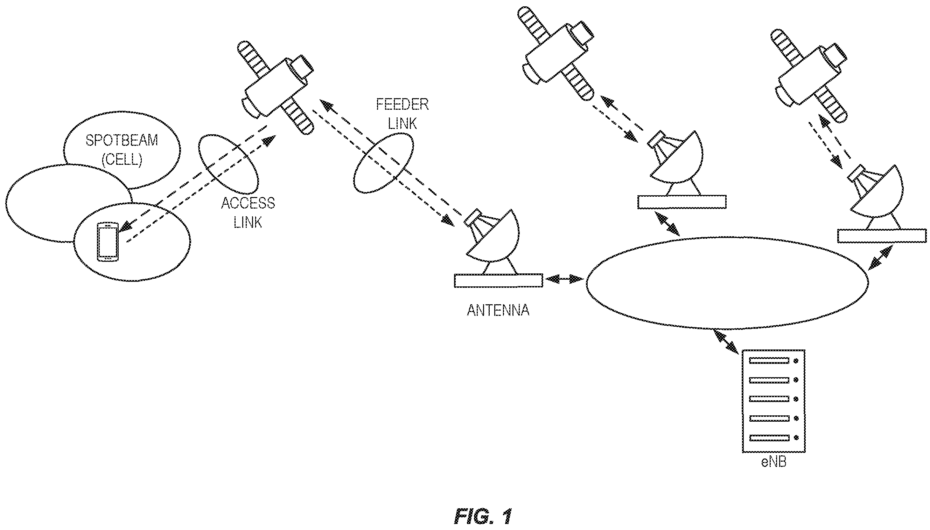

Figure 1 shows an example architecture of a satellite network with bent pipe transponders. The two main physical phenomena that affect satellite communications system design are the long propagation delay and Doppler effects. The Doppler effects are especially pronounced for LEO satellites.

Propagation delays

Propagation delay is a main physical phenomenon in a satellite communication system that makes the design different from that of a terrestrial mobile system. For a bent pipe satellite network, the following delays are relevant.

- One-way delay: from the eNB/gNB to the UE via the satellite, or the other way around (i.e., from the UE to the eNB/gNB via the satellite)

- Round-trip delay: from the eNB to the UE via the satellite and from the UE back to the eNB via the satellite

- Differential delay: the delay difference of two selected points in the same spotbeam

Note that there may be additional delay between the ground eNB/gNB antenna and eNB, which may or may not be collocated. This delay depends on deployment. If the delay cannot be ignored, it should be taken into account in the communications system design.

The propagation delay depends on the length of the signal path, which further depends on the elevation angles of the satellite seen by the eNB/gNB and UE on the ground. The minimum elevation angle is typically more than 10° for UE and more than 5° for eNB/gNB on the ground. These values will be assumed in the delay analysis below.

The following Tables (Table 1 and Table 2) are taken from 3GPP TR 38.811 (See, 3GPP TR 38.811 V1.0.0 (2018-06), Study on New Radio (NR) to support non-terrestrial networks). As shown, the round-trip delay is much larger in satellite systems. For example, it is about 545 ms for a GEO satellite system. In contrast, the round-trip time is normally no more than 1 ms for typical terrestrial cellular networks.

Table 1:

| Propagation delays for GEO satellite at 35,786 km (extracted from Table 5.3.2.1-1 in 3GPP TR 38.811 (See, 3GPP TS 38.211 V15.2.0 (2018-06), NR Physical Channels and Modulation)) | | | |
|---|---|---|---|
| **GEO at 35786 km** | | | |
| **Elevation angle** | **Path** | **D (km)** | **Time (ms)** |
| UE :10° | satellite - UE | 40586 | 135.286 |
| GW : 5° | satellite - gateway | 41126.6 | 137.088 |
| 90° | satellite - UE | 35786 | 119.286 |
| Bent Pipe satellite | | | |
| One way delay | Gateway-satellite_UE | 81712.6 | 272.375 |
| Round trip Time | Twice | 163425.3 | 544.751 |
| Regenerative Satellite | | | |
| One way delay | Satellite -UE | 40586 | 135.286 |
| Round Trip Time | Satellite-UE-Satellite | 81172 | 270.572 |

Table 2: Propagation delays for NGSO satellites (extracted from Table 5.3.4.1-1 in 3GPP TR 38.811 (See, 3GPP TS 38.211 V15.2.0 (2018-06), NR Physical Channels and Modulation))

| | | **LEO at 600 km** | | **LEO at 1500 km** | | **MEO at 10000 km** | |
|---|---|---|---|---|---|---|---|
| **Elevation angle** | **Path** | **Distance D (km)** | **Delay (ms)** | **Distance D (km)** | **Delay (ms)** | **Distance D (km)** | **Delay (ms)** |
| UE: 10° | satellite - UE | 1932.24 | 6,440 | 3647.5 | 12,158 | 14018.16 | 46.727 |
| GW: 5° | satellite - gateway | 2329.01 | 7.763 | 4101.6 | 13.672 | 14539.4 | 48.464 |
| 90° | satellite - UE | 600 | 2 | 1500 | 5 | 10000 | 33.333 |
| Bent pipe satellite | | | | | | | |
| One way delay | Gateway-satellite_UE | 4261.2 | 14.204 | 7749.2 | 25.83 | 28557.6 | 95.192 |
| Round Trip Delay | Twice | 8522.5 | 28.408 | 15498.4 | 51.661 | 57115.2 | 190.38 |
| Regenerative satellite | | | | | | | |
| One way delay | Satellite -UE | 1932.24 | 6.44 | 3647.5 | 12.16 | 14018.16 | 46.73 |
| Round Trip Delay | Satellite-UE-Satellite | 3864.48 | 12.88 | 7295 | 24.32 | 28036.32 | 93.45 |

Generally, within a spotbeam covering one cell, the delay can be divided into a common delay component and a differential delay component. The common delay is the same for all UEs in the cell and is determined with respect to a reference point in the spotbeam. In contrast, the differential delay is different for different UEs, which depends on the propagation delay between the reference point and the point at which a given UE is positioned within the spotbeam.

The differential delay is mainly due to the different path lengths of the access links, since the feeder link is normally the same for terminals in the same spotbeam. Further, the differential delay is mainly determined by the size of the spotbeam. The differential delay may range from sub-ms (for a spotbeam on the order of tens of kms) to tens of ms (for a spotbeam on the order of thousands of kms).

Doppler effects

Doppler is another major physical phenomenon that shall be properly taken into account in a satellite communication system. The following Doppler effects are particularly relevant.

- Doppler shift: the shift of the signal frequency due to the motion of the transmitter, the receiver, or both.

- Doppler variation rate: the derivative of the Doppler shift function of time, i.e., it characterizes how fast the Doppler shift evolves over time.

Doppler effects depend on the relative speed of the satellites and the UE and the carrier frequency.
For GEO satellites, they are fixed in principle and thus do not induce Doppler shift. In reality, however, they move around their nominal orbital positions due to for example perturbations. A GEO satellite is typically maintained inside a box (See, 3GPP TR 38.811 V1.0.0 (2018-06), Study on New Radio (NR) to support non-terrestrial networks):

- +/- 37.5 km in both latitude and longitude directions corresponding to an aperture angle of +/- 0.05 °

- +/- 17.5 km in the equatorial plane

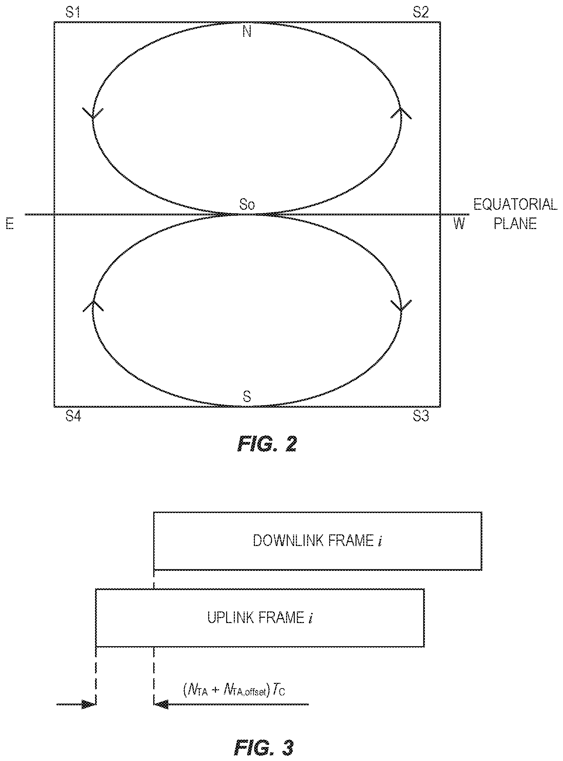

The trajectory the GEO satellite typically follows is a figure "8" pattern, as illustrated in Figure 2.
Table 3 gives example Doppler shifts of GEO satellites. For a GEO satellite maintained inside the box and moving according to the figure "8" pattern, the Doppler shifts due to the GEO satellite movement are negligible.
However, if a GEO satellite is not maintained inside the box, the motion could be near GEO orbit with inclination up to 6°. The Doppler shifts due to the GEO satellite movement may not be negligible.

Table 3: Example Doppler shifts of GEO satellites (extracted from Tables 5.3.2.3-4 and 5.3.2.3-5 in 3GPP TR 38.811 (See, 3GPP TR 38.811 V1.0.0 (2018-06), Study on New Radio (NR) to support non-terrestrial networks))

|  | Frequency | 2 GHz | 20 GHz | 30 GHz |
|---|---|---|---|---|
| S2 to S1 | Doppler shift (Hz) | -0.25 | -2.4 | -4.0 |
| S1 to S4 | Doppler shift (Hz) | 2.25 | 22.5 | 34 |
| Not maintained inside the box (with inclination up to 6°.) | Doppler shift (Hz) | 300 | 3000 | 4500 |

The Doppler effects become remarkable for MEO and LEO satellites. Table 4 gives example Doppler shifts and rates of Non-Geostationary Satellite Orbit (NGSO) satellites such as LEO and MEO. It is shown that the Doppler shifts and rates due to the NGSO satellite movement should be properly considered in the communications system design.

Table 4:

| Doppler shits and variation rates of NGSO satellites (extracted from Table 5.3.4.3.2-7 in 3GPP TR 38.811 (See, 3GPP TR 38.811 V1.0.0 (2018-06), Study on New Radio (NR) to support non-terrestrial networks)) | | | | |
|---|---|---|---|---|
| Frequency (GHz) | Max doppler | Relative Doppler | Max Doppler shift variation | |
| 2 | +/- 48 kHz | 0.0024 % | - 544 Hz/s | LEO at 600 km altitude |
| 20 | +/- 480 kHz | 0.0024 % | -5.44 kHz/s | |
| 30 | +/- 720 kHz | 0.0024 % | -8.16 kHz/s | |
| 2 | +/- 40 kHz | 0.002 % | -180 Hz/s | LEO at 1500 km altitude |
| 20 | +/- 400 kHz | 0.002 % | -1.8 kHZ/s | |
| 30 | +/- 600 kHz | 0.002 % | -2.7 kHz/s | |

(continued)

| Doppler shits and variation rates of NGSO satellites (extracted from Table 5.3.4.3.2-7 in 3GPP TR 38.811 (See, 3GPP TR 38.811 V1.0.0 (2018-06), Study on New Radio (NR) to support non-terrestrial networks)) | | | | |
|---|---|---|---|---|
| **Frequency (GHz)** | **Max doppler** | **Relative Doppler** | **Max Doppler shift variation** | |
| 2 | +/- 15 kHz | 0.00075 % | -6 Hz/s | MEO at 10000 km altitude |
| 20 | +/- 150 kHz | 0.00075 % | -60 Hz/s | |
| 30 | +/- 225 kHz | 0.00075 % | -90 Hz/s | |

NR Frame Structure

In NR, multiple numerologies are supported which are given in Table 5 below where $\mu$ denotes the numerology index. As shown in the table, normal cyclic prefix (CP) is supported for all numerologies (15kHz, 30kHz, 60kHz, 120kHz, and 240kHz) while the extended CP is supported for 60kHz numerology.

Table 5

| Numerologies supported in NR (extracted from Table 4.2-1 of (See, 3GPP TS 38.211 V15.2.0 (2018-06), NR Physical Channels and Modulation)). | | |
|---|---|---|
| $\mu$ | $\Delta f = 2^{\mu} \cdot 15 [kHz]$ | **Cyclic prefix** |
| 0 | 15 | Normal |
| 1 | 30 | Normal |
| 2 | 60 | Normal, Extended |
| 3 | 120 | Normal |
| 4 | 240 | Normal |

In downlink (DL) and uplink (UL), transmissions in NR is organized in terms of frames of duration $T_f = (\Delta f_{max} N_f / 100) \cdot T_c = 10$ ms where $\Delta f_{max} = 480 \cdot 10^3$ Hz, $N_f = 4096$, and $T_c = 1/(\Delta f_{max} \cdot N_f)$. Each frame consists of ten subframes of duration $T_{sf} = (\Delta f_{max} N_f / 1000) \cdot T_c = 1$ ms. Generally, there are two sets of frames on a carrier, one in UL and another on the DL (See, 3GPP TS 38.211 V15.2.0 (2018-06), NR Physical Channels and Modulation).

The number of consecutive Orthogonal Frequency Division Multiplexing (OFDM) symbols in a subframe is given by $N_{symb}^{subframe,\mu} = N_{symb}^{slot} N_{slot}^{subframe,\mu}$, wherein $N_{slot}^{subframe,\mu}$ denotes the number of slots per subframe for numerology configuration $\mu$, and $N_{symb}^{slot}$ denotes the number of OFDM symbols per slot. The values of $N_{slot}^{subframe,\mu}$ and $N_{symb}^{slot}$ for different numerology configurations are given in Table 6 and Table 7 for normal CP and extended CP, respectively. Also shown in these tables are the number of slots per frame ( $N_{slot}^{frame,\mu}$ ) for a given numerology configuration $\mu$.

Table 6:

| The values of $N_{symb}^{slot}$ , $N_{slot}^{frame,\mu}$ , and $N_{slot}^{subframe,\mu}$ for normal cyclic prefix (extracted from Table 4.3.2-1 of 3GPP TS 38.211 V15.2.0 (2018-06), NR Physical Channels and Modulation). | | | |
|---|---|---|---|
| $\mu$ | $N_{symb}^{slot}$ | $N_{slot}^{frame,\mu}$ | $N_{slot}^{subframe,\mu}$ |
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**Table 7:**

| The values of $N_{\text{symb}}^{\text{slot}}$, $N_{\text{slot}}^{\text{frame},\mu}$, and $N_{\text{slot}}^{\text{subframe},\mu}$ for extended cyclic prefix (extracted from Table 4.3.2-2 of 3GPP TS 38.211 V15.2.0 (2018-06), NR Physical Channels and Modulation). | | | |
|---|---|---|---|
| $\mu$ | $N_{\text{symb}}^{\text{slot}}$ | $N_{\text{slot}}^{\text{frame},\mu}$ | $N_{\text{slot}}^{\text{subframe},\mu}$ |
| 2 | 12 | 40 | 4 |

As illustrated in Figure 3, in a typical NR UE, the $i^{th}$ uplink frame from the UE starts $T_{\text{TA}} = (N_{\text{TA}} + N_{\text{TA,offset}})T_{\text{c}}$ before the start of the corresponding downlink frame. Note that the value of $N_{\text{TA offset}}$ depends on both the duplex mode of the cell and the frequency range as shown in Table 8, where frequency range 1 (FR1) is defined as the range of 450 MHz - 6000 MHz, and frequency range 2 (FR2) is defined as the range of 24250 MHz - 52600 MHz (See, 3GPP TS 38.104 V15.2.0 (2018-06); NR Base Station (BS) radio transmission and reception). As can be seen in Table 8, $N_{\text{TA offset}}$ is either zero (for Frequency Division Duplexing (FDD) in FR1) or in the micro-seconds range (i.e., ~7 micro-seconds for FR2, ~13 micro-seconds or ~20 micro-seconds for Time Division Duplexing (TDD) in FR1). $N_{\text{TA}}$ is a timing advance component that is specific to each UE. Typically, the timing advance $T_{\text{TA}} = (N_{\text{TA}} + N_{\text{TA,offset}})T_{\text{c}}$ in a terrestrial UE being served by a gNB is in the order of 1ms. To be precise, the maximum timing advance commands carried in Msg2 are about 0.67 ms and 2 ms in LTE and NR, respectively.

Table 8:

| The values of $N_{\text{TA offset}}$ as defined in 3GPP TS 38.133 V15.2.0 (2018-06); NR Requirements for support of radio resource management (Extracted from Table 7.1.2-2) | |
|---|---|
| **Frequency range and band of cell used for uplink transmission** | $N_{\text{TA offset}}$ (Unit: Tc) |
| FDD in FR1 | 0 |
| FR1 TDD band | 39936 or 25600 |
| FR2 | 13792 |

In NR Rel-15, there are five different physical uplink control channel (PUCCH) formats defined 3GPP TS 38.213 V15.2.0 (2018-06); NR Physical layer procedures for control. These PUCCH formats are used to carry different uplink control information (UCI) such as HARQ-ACK feedback information, scheduling requests (SR), and channel state information (CSI). The five PUCCH formats are briefly described below:

- PUCCH format 0 can be used by the UE to transmit UCI when the number of HARQ-ACK information bits with positive or negative SR is either 1 or 2. PUCCH format 0 spans either 1 or 2 OFDM symbols.

- PUCCH format 1 can be used by the UE to transmit UCI when the number of HARQ-ACK information bits with positive or negative SR is either 1 or 2. PUCCH format 1 spans over 4 or more OFDM symbols.

- PUCCH format 2 can be used by the UE to transmit UCI when the number of UCI bits carrying CSI, HARQ-ACK, and/or SR exceeds 2 bits. PUCCH format 2 spans either 1 or 2 OFDM symbols.

- PUCCH format 3 can be used by the UE to transmit UCI when the number of UCI bits carrying CSI, HARQ-ACK, and/or SR exceeds 2 bits. PUCCH format 3 spans over 4 or more OFDM symbols.

- PUCCH format 4 can be used by the UE to transmit UCI when the number of UCI bits carrying CSI, HARQ-ACK, and/or SR exceeds 2 bits. PUCCH format 4 spans over 4 or more OFDM symbols. PUCCH format 4 uses the same structure as PUCCH format 3 but allows multiplexing multiple-users via an orthogonal cover code.

HARQ-ACK Transmission

HARQ-ACK is transmitted in PUCCH within slot *n + k* under one of the following circumstances (See, 3GPP TS 38.213 V15.2.0 (2018-06); NR Physical layer procedures for control):

- if the UE detects a DCI (either DCI format 1_0 or DCI format 1_1) that schedules a PDSCH reception in slot $n$

- if the UE detects a DCI (DCI format 1_0) that indicates a Semi-Persistent Scheduling (SPS) PDSCH release with a PDCCH received in slot $n$

The HARQ-ACK transmitted within slot n+kcorresponds to the PDSCH reception or the SPS PDSCH release command received in slot $n$ above. The value of $k$ which is given in a number of slots is indicated by the *PDSCH-to-HARQ-timing-indicator* field in DCI (if the field is present) or is provided by the higher layer parameter *dl-DataToUL-ACK*.

For an SPS PDSCH received in slot n, HARQ-ACK is transmitted in PUCCH in slot *n+k,* where *k* is indicated by the *PDSCH-to-HARQ-timing-indicator* field in DCI (if the field is present) or is provided by the higher layer parameter *dl-DataToUL-ACK.*

In DCI format 1_0, the 3-bit PDSCH-to-HARQ-timing-indicator field is mapped to slot values of {1, 2, 3, 4, 5, 6, 7, 8} (that is, one of the slot values in the set {1, 2, 3, 4, 5, 6, 7, 8} is indicated by the PDSCH-to-HARQ-timing-indicator field).

In DCI format 1_1, if the 3-bit PDSCH-to-HARQ-timing-indicator field is present in the PDCCH, then this field maps to values from a set of number of slots provided by higher layer parameter *dl-DataToUL-ACK* as illustrated in Table 9. As defined in 3GPP TS 38.331 V15.2.1 (2018-06); NR Radio Resource Control (RRC) protocol specification, the different possible values that can be configured in Release 15 NR specifications are in the range from 0 to 15 slots.

When DCI format 1_1 does not include a PDSCH-to-HARQ-timing indicator filed, and if a UE detects such a DCI format 1_1 which schedules a PDSCH reception or activates a SPS PDSCH reception in slot *n,* HARQ-ACK is transmitted in PUCCH within slot n+kwhere *k* is provided by higher layer parameter *dl-DataToUL-ACK.*

Table 9: Mapping of PDSCH-to-HARQ-timing indicator field values to numbers of slots (extracted from Table 9.2.3-1 of 3GPP TS 38.213 V15.2.0 (2018-06); NR Physical layer procedures for control)

| PDSCH-to-HARQ_feedback timing indicator | Number of slots $k$ |
|---|---|
| '000' | 1st value provided by *dl-DataToUL-ACK* |
| '001' | 2nd value provided by *dl-DataToUL-ACK.* |
| '010' | 3rd value provided by *dl-DataToUL-ACK.* |
| '011' | 4th value provided by *dl-DataToUL-ACK.* |
| '100' | 5th value provided by *dl-DataToUL-ACK.* |
| '101' | 6th value provided by *dl-DataToUL-ACK.* |
| '110' | 7th value provided by *dl-DataToUL-ACK.* |
| '111' | 8th value provided by *dl-DataToUL-ACK.* |

SR Transmission

In NR, an SR is transmitted in PUCCH format 0 or PUCCH format 1 by the UE to request uplink resources for data transmission. A UE is configured with a periodicity $SR_{PERIODICITY}$ (in number of symbols or slots) and an offset $SR_{OFFSET}$ (in slots). When $SR_{PERIODICITY}$ is greater than 1 slot, the SR transmission occasion in a PUCCH is determined by the UE to be in slot $n_{s,f}^{\mu}$ of frame $n_f$ if the following condition is met: $\left(n_f \cdot N_{slot}^{frame,\mu} + n_{s,f}^{\mu} - SR_{OFFSET}\right) \bmod SR_{PERIODICITY} = 0$ (See, 3GPP TS 38.213 V15.2.0 (2018-06); NR Physical layer procedures for control). When $SR_{PERIODICITY}$ is smaller than 1 slot, the SR transmission occasion in a PUCCH is determined by the UE to be in an OFDM symbol with index $l$, if the condition $(l-l_0 \bmod SR_{PERIODICITY}) \bmod SR_{PERIODICITY} = 0$ is met wherein $l_0$ is given by higher layer parameter *startingSymbolIndex* (See, 3GPP TS 38.213 V15.2.0 (2018-06); NR Physical layer procedures for control).

CSI Transmission

In NR, two configurations for reporting CSI on PUCCH are possible which are periodic CSI reporting and semi-persistent CSI reporting on PUCCH. For periodic and semi-persistent CSI reporting on PUCCH, the periodicity and slot offset are higher layers configured by parameter *reportSlotConfig*. Semi-persistent CSI reporting on PUCCH is activated by an activation command which is carried by a PDSCH (See, 3GPP TS 38.214 V15.2.X (2018-06); NR Physical layer procedures for data). The activation command selects one of the semi-persistent reporting settings for CSI reporting on PUCCH. The semi-persistent reporting setting indicated by the activation command should be applied starting from slot

$n + 3N_{slot}^{subframe,\mu} + 1$, where $n$ is the slot number in which the HARQ-ACK corresponding to the PDSCH carrying the activation command is transmitted by the UE.

## Uplink control and data information in NR PUSCH

PUSCH is scheduled by DCI, and the Time domain resource assignment field of the DCI provides an index to a table with information on resource allocation in time domain. This information includes, but is not limited to, the slot offset K2, the start and length indicator (SLIV), or directly the start symbol S and the allocation length L, and the PUSCH mapping type to be applied in the PUSCH transmission. For a particular case, with PUSCH with no transport block and a CSI request field on a DCI, K2 is determined by a higher layer Radio Resource Control (RRC) parameter.

The slot where the UE shall transmit the PUSCH is determined by K2 as $\left\lfloor n \cdot \dfrac{2^{\mu_{PUSCH}}}{2^{\mu_{PDCCH}}} \right\rfloor + K_2$ where n is the slot with the scheduling DCI, K2 is based on the numerology of PUSCH, and $\mu_{\text{PUSCH}}$ and $\mu_{\text{PDCCH}}$ are the subcarrier spacing configurations for PUSCH and PDCCH, respectively. The determination of starting symbol, the number of consecutive symbols L, PUSCH mapping type, etc., are similar on a high layer and details can be found in [Section 6.1.2, 8].

## Uplink Control Information in NR PUSCH

If a UE has a PUSCH transmission that overlaps with a PUCCH transmission that includes HARQ-ACK information and/or semi-persistent/periodic CSI and the conditions in Subclause 9.2.5 for multiplexing the UCI in the PUSCH are satisfied, the UE multiplexes the HARQ-ACK information and/or the semi-persistent/periodic CSI in the PUSCH.

## CSI Transmission

In NR, two configurations for reporting CSI on PUSCH are possible which are aperiodic CSI reporting and semi-persistent CSI reporting on PUSCH. Both aperiodic CSI and semi-persistent CSI on PUSCH are activated/triggered by DCI, and the allowed slot offset from the activating/triggering DCI are configured by higher layer parameter *reportSlotOffsetList*(See, 3GPP TS 38.214 V15.2.X (2018-06); NR Physical layer procedures for data). The range of slot offsets allowed in *reportSlotOffsetList in* Release-15 NR is from 0 to 32 (See, 3GPP TS 38.331 V15.2.1 (2018-06); NR Radio Resource Control (RRC) protocol specification). The slot offset is selected by the activating/triggering DCI.

## SS block configuration

In NR, the set of Reference Signals (RSs) based on which UE performs initial access is a Synchronization Signal Block (SSB). The structure of an SSB in NR is described below.

The signals comprised in an SS block may be used for measurements on the NR carrier, including intra-frequency, inter-frequency and inter-Radio Access Technology (RAT) (i.e., NR measurements from another RAT).

SS block (can also be referred to as SS/PBCH block or SSB): NR-Primary Synchronization Signal (PSS), NR-Secondary Synchronization Signal (SSS) and/or NR-Physical Broadcasting Channel (PBCH) can be transmitted within an SS block. For a given frequency band, an SS block corresponds to N OFDM symbols based on one subcarrier spacing (e.g., default or configured), and N is a constant. UE shall be able to identify at least OFDM symbol index, slot index in a radio frame and radio frame number from an SS block. A single set of possible SS block time locations (e.g., with respect to radio frame or with respect to SS burst set) is specified per frequency band. At least for a multi-beam case, at least the time index of SS-block is indicated to the UE. The position(s) of actual transmitted SS-blocks is informed for helping CONNECTED/IDLE mode measurement, for helping CONNECTED mode UE to receive DL data/control in unused SS-blocks and potentially for helping IDLE mode UE to receive DL data/control in unused SS-blocks. The maximum number of SS-blocks within SS burst set, L, for different frequency ranges are:

- For frequency range up to 3 GHz, L is 4
- For frequency range from 3 GHz to 6 GHz, L is 8
- For frequency range from 6 GHz to 52.6 GHz, L is 64

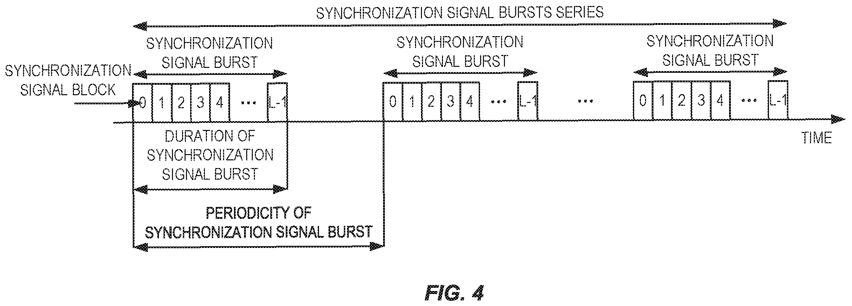

SS burst set: One or multiple SS burst(s) further compose an SS burst set (or series) where the number of SS bursts within a SS burst set is finite. From physical layer specification perspective, at least one periodicity of SS burst set is supported. From UE perspective, SS burst set transmission is periodic. At least for initial cell selection, UE may assume a default periodicity of SS burst set transmission for a given carrier frequency (e.g., one of 5 ms, 10 ms, 20 ms, 40 ms, 80 ms, or 160 ms). UE may assume that a given SS block is repeated with a SS burst set periodicity. By default, the UE may neither assume the gNB transmits the same number of physical beam(s), nor the same physical beam(s) across different SS-blocks within an SS burst set. In a special case, an SS burst set may comprise one SS burst. This is illustrated in Figure 4 which is an example configuration of SS blocks, SS bursts and SS burst sets/series.

For each carrier, the SS blocks may be time-aligned or overlap fully or at least in part, or the beginning of the SS blocks may be time-aligned (e.g., when the actual number of transmitted SS blocks is different in different cells).

There currently exist certain challenges. In NR Release 15, the timing relationships of UCI transmission in NR PUCCH and PUSCH and of uplink data transmission in PUSCH are designed to be suitable for a terrestrial radio propagation environment where the round-trip delay is usually in the order of 1ms. As a result, the existing uplink transmission timing relationships is not suitable for long propagation delays in satellite communications systems that range from tens of milliseconds (LEO) to hundreds of milliseconds (GEO), and the large differential delay in a spotbeam in satellite communications systems that may range from sub-milliseconds to tens of milliseconds (depending on the size of spotbeam).

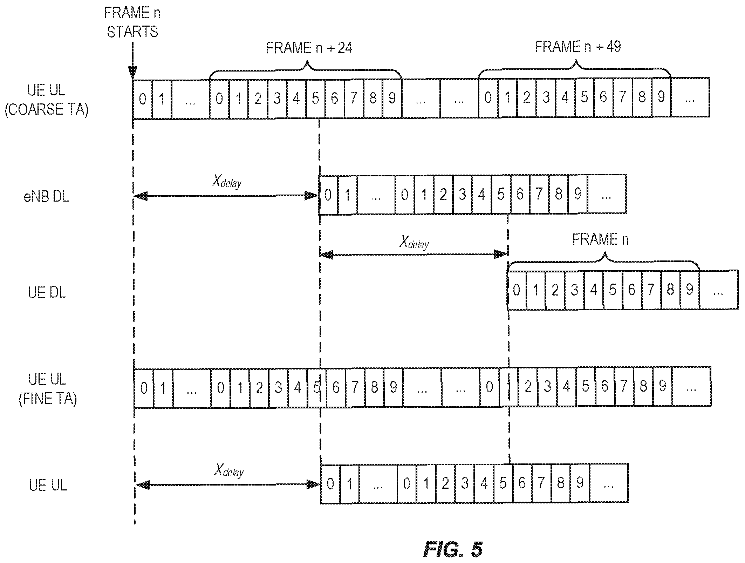

Figure 5 illustrates an example of time alignment with coarse Timing Alignment (TA) and fine TA.

Embodiment 1:

Let the absolute one way delay between a UE and the gNB in a satellite radio access network be denoted by $X_{delay}$ ms (the one way delay includes both the common delay and the differential delay), where the one way delay is generally much larger than the subframe duration $T_{sf}$ ($\Delta f_{max} N_f / 1000) \cdot T_c$ = 1 ms. Now let $X_{delay}^{slots} = \left\lfloor \dfrac{2 X_{delay} N_{slot}^{subframe,\mu}}{T_{sf}} \right\rfloor$ be the largest integer number of slots whose duration is smaller than the round-trip delay $2X_{delay}$ (that is, $X_{delay}^{slots}$ is the largest integer satisfying $X_{delay}^{slots} \dfrac{T_{sf}}{N_{slot}^{subframe,\mu}} \le 2 X_{delay}$ ). We will henceforth refer to the duration $X_{delay}^{slots} \dfrac{T_{sf}}{N_{slot}^{subframe,\mu}}$ as the quantized round-trip delay.

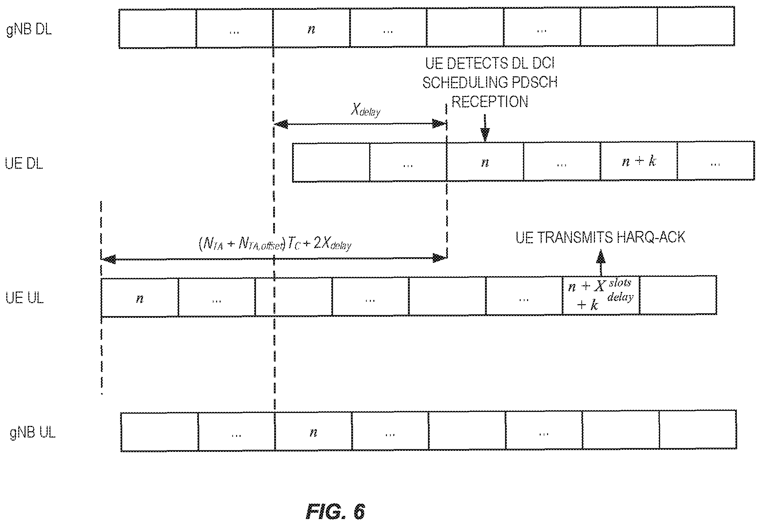

Figure 6 shows an example illustrating HARQ timing for this embodiment. In this embodiment, the UL frame timing at the UE is time advanced from the DL frame timing at the UE by the round-trip delay in addition to the timing advance $(N_{TA} + N_{TA,offset})T_c$ discussed in Figure 3. The timing diagrams in Figure 6 are under the assumption that the UE has completed random access procedure and achieved UL and DL synchronization. As shown in Figure 6, the overall timing advance of the UL frame timing with respect to the DL frame timing at the UE is $(N_{TA} + N_{TA,offset})T_c + 2X_{delay}$. Furthermore, in this embodiment, the DL frame timing and the UL frame timing at the gNB side are time aligned.

In this embodiment, when the UE detects a DCI that schedules a PDSCH reception in slot n, the HARQ-ACK corresponding to this PDSCH is transmitted within slot $n + X_{delay}^{slots} + k$. In another embodiment, when the UE detects a DCI that indicates an SPS PDSCH release with a PDCCH received in n, the HARQ-ACK corresponding to this PDSCH is transmitted within slot $n + X_{delay}^{slots} + k$. In yet another embodiment, when the UE receives an SPS PDSCH in slot n, the HARQ-ACK corresponding to this PDSCH is transmitted within slot $n + 2X_{delay}^{slots} + k$. In these embodiments, the additional $X_{delay}^{slots}$ slots are needed to feed back the HARQ-ACK to compensate for the long propagation delays in satellite communications systems.

Since the one-way delay $X_{delay}$ is UE-specific (because different UEs within a spotbeam have different $X_{delay}$), in some specific embodiments the gNB higher layer configures each UE with a value of $X_{delay}^{slots}$. Alternatively, the gNB can higher layer configure the UE with any of the one-way delay, the round-trip delay, the one-way delay quantized to the closest number of slots, or the round-trip delay quantized to the closest number of slots.

In one detailed embodiment, if the *PDSCH-to-HARQ-timing-indicator* field is present in DCI, the number of slots after which to transmit HARQ-ACK (i.e., $X_{delay}^{slots} + k$ slots after the UE detecting the DCI in slot n) is determined at the UE as the sum of the value $X_{delay}^{slots}$ and the value indicated by the *PDSCH-to-HARQ-timing-indicator* field in DCI.

In another detailed embodiment, the number of slots after which to transmit HARQ-ACK (i.e., $X_{delay}^{slots} + k$ slots after the UE detecting the DCI in slot *n*) is determined at the UE as the sum of the value $X_{delay}^{slots}$ and a value provided by the higher layer parameter *dl-DataToUL-ACK.*

In a further detailed embodiment, the different possible values that can be configured for higher layer parameter *dl-DataToUL-ACK* are extended from its current range from 0 to 15 slots to accommodate the inclusion of the quantized one-way delay in the indication of the HARQ-ACK timing.

Embodiment 1a:

The common round-trip delay $2T_{delay\_common}$ is broadcast by a gNB/eNB to UEs in a spotbeam. In addition, the start time of a system frame is either broadcast to UEs or pre-specified. For example, it may be specified that the 1st system subframe starts at 2019-01-01 00:00:00:00. A UE determines its one-way delay, $X_{delay}$, to the gNB/eNB using a method such as GPS and the actual received system frames in the DL. For example, if a UE receives a system frame *n* at time $t_x$ and the expected time for the system frame is $t_n$, then the UE can estimate the one-way delay as $X_{delay} = t_x - t_n$.

The UE can then determine the difference between its round-trip delay and the common round-trip delay as

$N_{diff\_rtd\_slots} = \left\lceil \frac{2X_{delay} - 2T_{delay\_common}}{T\_slot} \right\rceil$ where $T\_slot$ is the slot duration. Alternatively, a quantized version of $2T_{delay\_common}$ in slots may be broadcast instead and the UE determines the remaining round-trip delay as

$$N_{diff\_rtd\_slots} = \left\lceil \frac{2X_{delay}}{T\_slot} \right\rceil - \left\lceil \frac{2T_{delay\_common}}{T\_slot} \right\rceil$$

The UE signals $N_{diff\_rtd\_slots}$ to the gNB/eNB so that gNB/eNB knows exactly which subframe it expects to receive a UL signal such as ACK/Negative Acknowledgement (NACK), CSI, SR and PUSCH.

Alternatively, one-way common delay may be broadcast to UEs

Yet in another embodiment, the UE may simply signal the round-trip delay in slots, $N_{rtd\_stors}$, to the gNB/eNB, where

$$N_{diff\_rtd\_slots} = \left\lceil \frac{2X_{delay}}{T\_slot} \right\rceil$$

Embodiment 2:

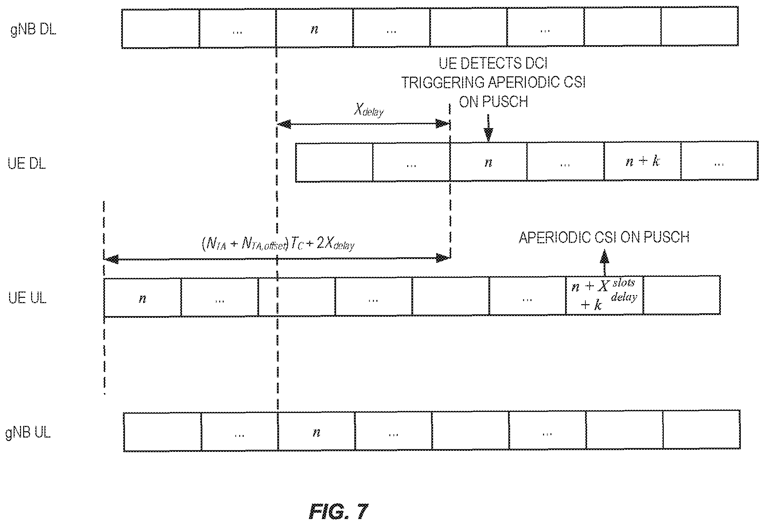

The notations $X_{delay}$ and $X_{delay}^{slots}$ in this embodiment are similar to the ones defined in Embodiment 1. Figure 7 shows an example illustrating timing of an aperiodic CSI transmission on PUSCH for this embodiment. In this embodiment, the UL frame timing at the UE is time advanced from the DL frame timing at the UE by the round-trip delay in addition to the timing advance $(N_{TA} + N_{TA,offset})T_c$ discussed in Figure 3. The timing diagrams in Figure 7 are under the assumption that the UE has completed random access procedure and achieved UL and DL synchronization. As shown in Figure 7, the overall timing advance of the UL frame timing with respect to the DL frame timing is $(N_{TA} + N_{TA,offset})T_c + 2X_{delay}$. Furthermore, in this embodiment, the DL frame timing and the UL frame timing at the gNB side are time aligned.

In this embodiment, when the UE detects a DCI that triggers an aperiodic CSI on PUSCH in slot n, the aperiodic CSI corresponding to this DCI trigger is transmitted in slot $n + X_{delay}^{slots} + K$, where *K* is the slot offset selected by the activating/triggering DCI from among the values configured by higher layer parameter *reportSlotOffsetList*. In this embodiment, the additional $X_{delay}^{slots}$ slots are needed to feed back the aperiodic CSI due to the long propagation delays in satellite communications systems.

Since the one-way delay $X_{delay}$, is UE-specific (because different UEs within a spotbeam have different $X_{delay}$), in some specific embodiments, the gNB higher layer configures each UE with a value of $X_{delay}^{slots}$. Alternatively, the gNB can higher layer configure the UE with any of the one-way delay, the round-trip delay, the one-way delay quantized to the closest number of slots, or the round-trip delay quantized to the closest number of slots.

In one detailed embodiment, the number of slots after which to transmit aperiodic CSI on PUSCH (i.e., $X_{delay} + K$ slots after the UE detecting the DCI in slot $n$) is determined at the UE as the sum of the value $X_{delay}^{slots}$ and the value indicated by the triggering DCI from among the slot offsets configured in higher layer parameter *reportSlotOffsetList*. In a further detailed embodiment, the different possible values that can be configured for higher layer parameter *reportSlotOffsetList* are extended from its current range from 0 to 32 slots to accommodate the inclusion of the quantized one-way delay in the indication of the aperiodic CSI reporting slot offset.

Embodiment 2a:

As a generalization of this embodiment, the slots where the UE shall transmit the PUSCH are determined by K2 and $X_{delay}^{slots}$ as $\left\lfloor n \cdot \dfrac{2^{\mu PUSCH}}{2^{\mu PDCCH}} \right\rfloor + K_2 + X_{delay}^{slots}$ where n is the Downlink slot with the scheduling DCI received and $X_{delay}^{slots}$ is an RRC parameter configured by eNB after initial access. Compared to the current NR specification, the propagation delay $X_{delay}$ is considered in the timing relation and a clarification is needed that n refers to the Downlink slot.

In another re-wording version of the embodiment, the slot where the UE shall transmit the PUSCH is determined by K2 as $\left\lfloor n \cdot \dfrac{2^{\mu PUSCH}}{2^{\mu PDCCH}} \right\rfloor + K_2$ where n is the uplink slot number corresponding to the time the scheduling DCI is received.

Due to timing advance, the time during which the scheduling DCI is received can span two uplink slots and the selected uplink slot n here corresponds to the uplink slot that overlaps with the DCI more than the other slot.

Embodiment 3:

In embodiments 1 to 2, it is assumed that gNB DL and UL frame timing is aligned, with the assumption that UE performs timing advance (taking in to account the round-trip delay) in the UE UL frame timing relative to the UE DL frame timing. To flexibly support the deployments with shifted DL and UL frame timing at the gNB, UE UL transmission timing can be specified as follows, transparent to the specific timing advance mechanism used.

- UE receives a command in the DL slot **n.**

- UE locates the corresponding slot index(es) in the UL frame timing

  ◦ In the exceptional cases, where UE UL and DL slot boundaries are fully aligned, there is a corresponding UE UL slot that fully overlaps with the UE DL slot **n.** Denote by **m** the slot index of the overlapping UL slot.

    • In this case, the reference UL slot index at the UE **m' = m**

  ◦ In the more common cases, UL and DL slot boundaries at the UE are not fully aligned, and there will be two corresponding UE uplink slots that partially overlap with the UE DL slot n. Denote by m and m + 1 the slot indices of the two overlapping UE UL slots.

    ▪ In one embodiment, the slot **m** is chosen as the reference: **m' = m**

    ▪ In another embodiment, the slot **m + 1** is chosen as the reference: **m' = m + 1**

    ▪ In another embodiment, **m' = m** if the slot **m** has more overlap with the DL slot **n** when compared to the overlap between slot **m** + 1 and DL slot **n.** Otherwise, **m' = m + 1.**

- UE UL transmission timing

  ◦ In a detailed embodiment in embodiment 1, when the UE detects a DCI that schedules a PDSCH reception in slot n, the HARQ-ACK corresponding to this PDSCH is transmitted within slot $n + X_{delay}^{slots} + k$ . Instead, under embodiment 3, the HARQ-ACK corresponding to this PDSCH is transmitted within slot *m' + k*

◦ Similar mechanisms can be applied to other detailed embodiments listed under Embodiments 1, 2 and 2a.

◦ Similar mechanisms can be applied to all UL transmission timing in NR and LTE

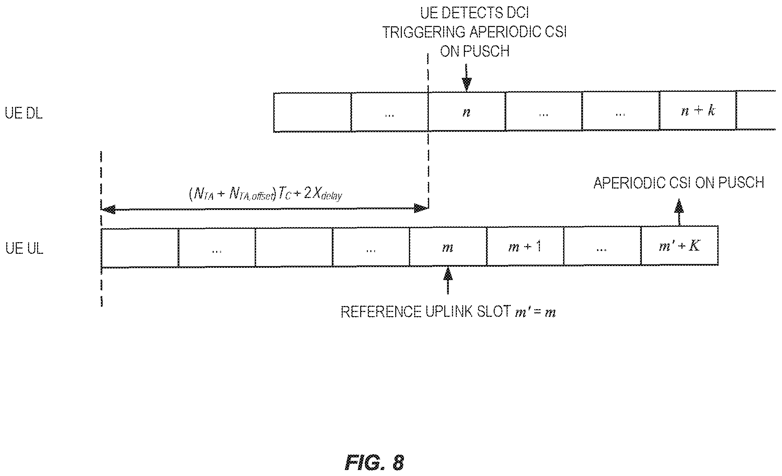

Figure 8 shows an example illustrating aperiodic CSI transmission timing for embodiment 3. In this example, the UE determines the reference uplink slot as $m'=m$ and transmits aperiodic PUSCH in slot $m' + K$ where $K$ is determined as described in embodiment 2.

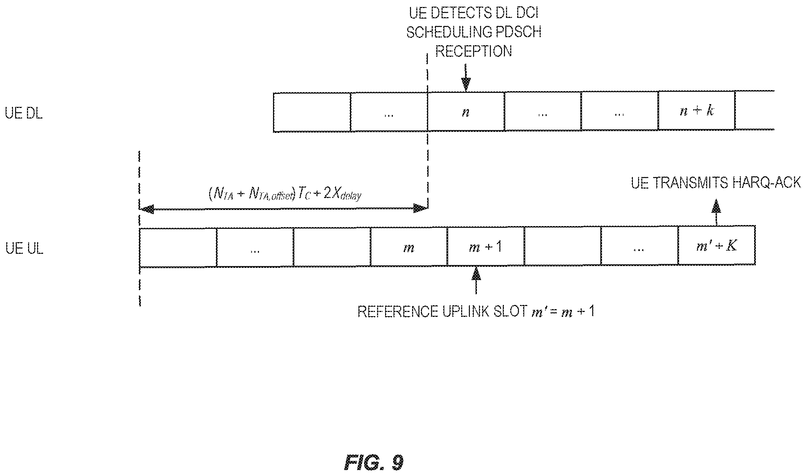

Figure 9 shows an example illustrating HARQ timing for embodiment 3. In this example, the UE determines the reference uplink slot as $m' = m + 1$ and transmits HARQ-ACK in slot $m' + k$ where $k$ is determined as described in embodiment 1.

Embodiment 4:

In embodiments 1 and 2 the default assumption for the one way delay denoted by $X_{delay}$ is that the one way delay includes both the common delay and the differential delay. In embodiment 4, which can be seen as dependent embodiment for 1 and 2, the signaling and adjustment of the one way delay is split between common delay and differential delay. In NR, a cell may be transmitting up to L SSB beams. In satellite systems, there are three deployment options regarding the relation between spotbeam, cell and SSB beam. The simplest one is that there is one SSB per cell, and in this case SSB resembles LTE CRS in the sense that it becomes cell wide RS. In the two other options, each SSB is a spotbeam and thus then there are more than one spotbeam sharing the same cell ID. Or, there is one to one mapping between cell and spotbeam and within one spotbeam, there is up to L SSB beams. In either of the latter cases, there may be one common delay per SSB beam and yet another common delay per cell. UEs differential delay may be towards the cell common delay or towards the SSB common delay. Both cell and/or SSB common delays may be broadcasted in system information. In this case, eNB can update only the differential delay to be used in the one way delay in embodiments 1 and 2.

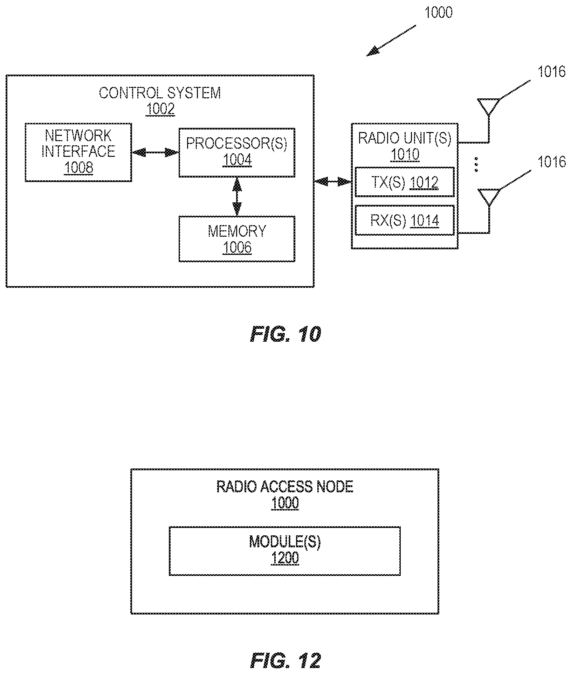

Figure 10 is a schematic block diagram of a radio access node 1000 (e.g., a Base Station (BS)) according to some embodiments of the present disclosure. The radio access node 1000 may be, for example, a satellite based radio access node. As illustrated, the radio access node 1000 includes a control system 1002 that includes one or more processors 1004 (e.g., Central Processing Units (CPUs), Application Specific Integrated Circuits (ASICs), Field Programmable Gate Arrays (FPGAs), and/or the like), memory 1006, and a network interface 1008. The one or more processors 1004 are also referred to herein as processing circuitry. In addition, the radio access node 1000 includes one or more radio units 1010 that each includes one or more transmitters 1012 and one or more receivers 1014 coupled to one or more antennas 1016. The radio units 1010 may be referred to or be part of radio interface circuitry. In some embodiments, the radio unit(s) 1010 is external to the control system 1002 and connected to the control system 1002 via, e.g., a wired connection (e.g., an optical cable). However, in some other embodiments, the radio unit(s) 1010 and potentially the antenna(s) 1016 are integrated together with the control system 1002. The one or more processors 1004 operate to provide one or more functions of a radio access node 1000 as described herein. In some embodiments, the function(s) are implemented in software that is stored, e.g., in the memory 1006 and executed by the one or more processors 1004.

In some embodiments, both the control system 1002 and the radio unit(s) 1010 are implemented in the satellite, e.g., of Figure 1. As one example alternative, the radio unit(s) may be implemented in the satellite, e.g., of Figure 1 and the control system 1002 may be implemented in a land-based component of the radio access node that is communicatively coupled to the satellite via the gateway, e.g., of Figure 1.

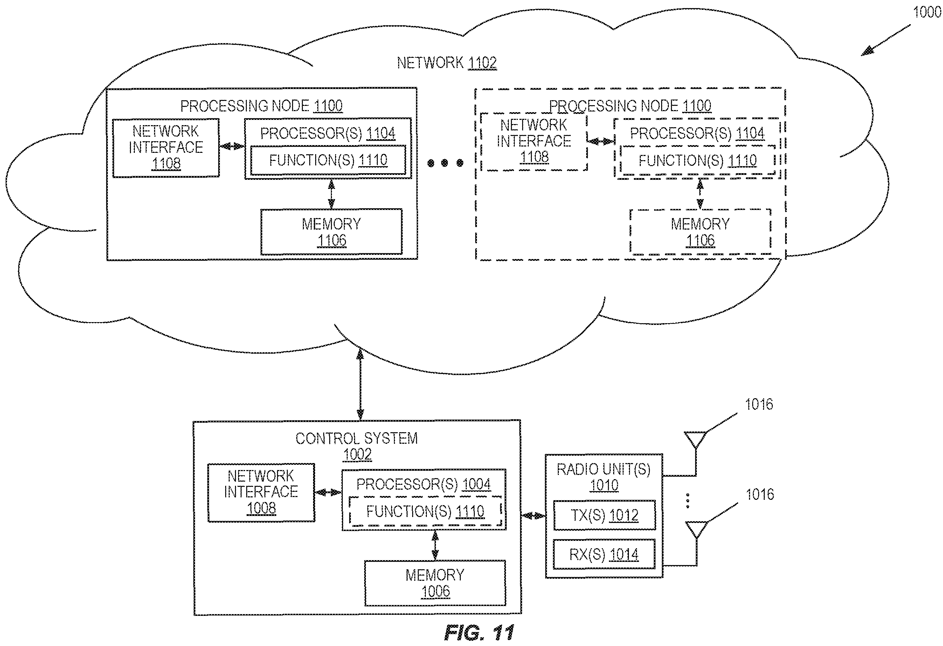

Figure 11 is a schematic block diagram that illustrates a virtualized embodiment of the radio access node 1000 according to some embodiments of the present disclosure. This discussion is equally applicable to other types of network nodes. Further, other types of network nodes may have similar virtualized architectures.

As used herein, a "virtualized" radio access node is an implementation of the radio access node 1000 in which at least a portion of the functionality of the radio access node 1000 is implemented as a virtual component(s) (e.g., via a virtual machine(s) executing on a physical processing node(s) in a network(s)). As illustrated, in this example, the radio access node 1000 includes the control system 1002 that includes the one or more processors 1004 (e.g., CPUs, ASICs, FPGAs, and/or the like), the memory 1006, and the network interface 1008 and the one or more radio units 1010 that each includes the one or more transmitters 1012 and the one or more receivers 1014 coupled to the one or more antennas 1016, as described above. The control system 1002 is connected to the radio unit(s) 1010 via, for example, an optical cable or the like. The control system 1002 is connected to one or more processing nodes 1100 coupled to or included as part of a network(s) 1102 via the network interface 1008. Each processing node 1100 includes one or more processors 1104 (e.g., CPUs, ASICs, FPGAs, and/or the like), memory 1106, and a network interface 1108.

In this example, functions 1110 of the radio access node 1000 described herein are implemented at the one or more processing nodes 1100 or distributed across the control system 1002 and the one or more processing nodes 1100 in any desired manner. In some particular embodiments, some or all of the functions 1110 of the radio access node 1000 described herein are implemented as virtual components executed by one or more virtual machines implemented in a virtual environment(s) hosted by the processing node(s) 1100. As will be appreciated by one of ordinary skill in the art, additional signaling or communication between the processing node(s) 1100 and the control system 1002 is used in order to carry out at least some of the desired functions 1110. Notably, in some embodiments, the control system 1002 may not be included, in which case the radio unit(s) 1010 communicate directly with the processing node(s) 1100 via an appropriate network interface(s).

In some embodiments, a computer program including instructions which, when executed by at least one processor, causes the at least one processor to carry out the functionality of radio access node 1000 or a node (e.g., a processing node 1100) implementing one or more of the functions 1110 of the radio access node 1000 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 12 is a schematic block diagram of the radio access node 1000 according to some other embodiments of the present disclosure. The radio access node 1000 includes one or more modules 1200, each of which is implemented in software. The module(s) 1200 provide the functionality of the radio access node 1000 described herein. This discussion is equally applicable to the processing node 1100 of Figure 11 where the modules 1200 may be implemented at one of the processing nodes 1100 or distributed across multiple processing nodes 1100 and/or distributed across the processing node(s) 1100 and the control system 1002.

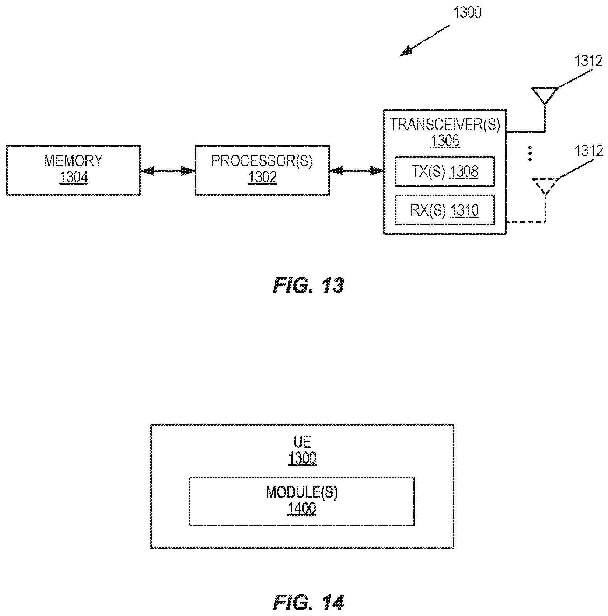

Figure 13 is a schematic block diagram of a UE 1300 according to some embodiments of the present disclosure. As illustrated, the UE 1300 includes one or more processors 1302 (e.g., CPUs, ASICs, FPGAs, and/or the like), memory 1304, and one or more transceivers 1306 each including one or more transmitters 1308 and one or more receivers 1310 coupled to one or more antennas 1312. The transceiver(s) 1306 includes radio-front end circuitry connected to the antenna(s) 1312 that is configured to condition signals communicated between the antenna(s) 1312 and the processor(s) 1302, as will be appreciated by on of ordinary skill in the art. The processors 1302 are also referred to herein as processing circuitry. The transceivers 1306 are also referred to herein as radio circuitry. In some embodiments, the functionality of the UE 1300 described above may be fully or partially implemented in software that is, e.g., stored in the memory 1304 and executed by the processor(s) 1302. Note that the UE 1300 may include additional components not illustrated in Figure 13 such as, e.g., one or more user interface components (e.g., an input/output interface including a display, buttons, a touch screen, a microphone, a speaker(s), and/or the like and/or any other components for allowing input of information into the UE 1300 and/or allowing output of information from the UE 1300), a power supply (e.g., a battery and associated power circuitry), etc.

In some embodiments, a computer program including instructions which, when executed by at least one processor, causes the at least one processor to carry out the functionality of the UE 1300 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 14 is a schematic block diagram of the UE 1300 according to some other embodiments of the present disclosure. The UE 1300 includes one or more modules 1400, each of which is implemented in software. The module(s) 1400 provide the functionality of the UE 1300 described herein.

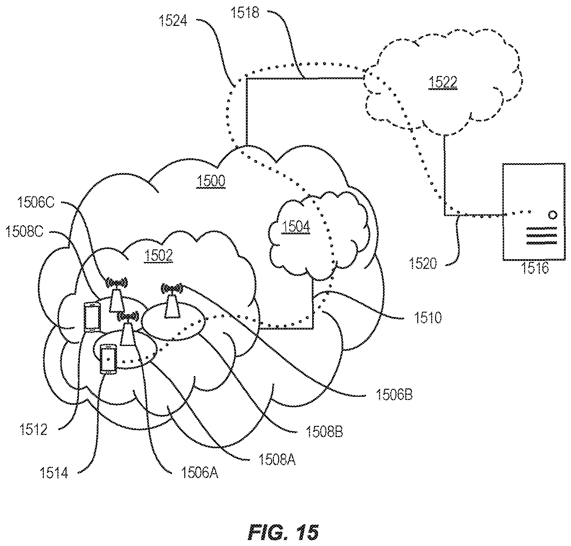

With reference to Figure 15, in accordance with an embodiment, a communication system includes a telecommunication network 1500, such as a 3GPP-type cellular network, which comprises an access network 1502, such as a RAN, and a core network 1504. The access network 1502 comprises a plurality of base stations 1506A, 1506B, 1506C, such as NBs, eNBs, gNBs, or other types of wireless Access Points (APs), each defining a corresponding coverage area 1508A, 1508B, 1508C. Note that some or all of the APs, in some embodiments, satellite-based base stations as described herein. Each base station 1506A, 1506B, 1506C is connectable to the core network 1504 over a wired or wireless connection 1510. A first UE 1512 located in coverage area 1508C is configured to wirelessly connect to, or be paged by, the corresponding base station 1506C. A second UE 1514 in coverage area 1508A is wirelessly connectable to the corresponding base station 1506A. While a plurality of UEs 1512, 1514 are illustrated in this example, the disclosed embodiments are equally applicable to a situation where a sole UE is in the coverage area or where a sole UE is connecting to the corresponding base station 1506.

The telecommunication network 1500 is itself connected to a host computer 1516, which may be embodied in the hardware and/or software of a standalone server, a cloud-implemented server, a distributed server, or as processing resources in a server farm. The host computer 1516 may be under the ownership or control of a service provider, or may be operated by the service provider or on behalf of the service provider. Connections 1518 and 1520 between the telecommunication network 1500 and the host computer 1516 may extend directly from the core network 1504 to the host computer 1516 or may go via an optional intermediate network 1522. The intermediate network 1522 may be one of, or a combination of more than one of, a public, private, or hosted network; the intermediate network 1522, if any, may be a backbone network or the Internet; in particular, the intermediate network 1522 may comprise two or more sub-networks (not shown).

The communication system of Figure 15 as a whole enables connectivity between the connected UEs 1512, 1514 and the host computer 1516. The connectivity may be described as an Over-the-Top (OTT) connection 1524. The host computer 1516 and the connected UEs 1512, 1514 are configured to communicate data and/or signaling via the OTT connection 1524, using the access network 1502, the core network 1504, any intermediate network 1522, and possible further infrastructure (not shown) as intermediaries. The OTT connection 1524 may be transparent in the sense that the participating communication devices through which the OTT connection 1524 passes are unaware of routing of uplink and downlink communications. For example, the base station 1506 may not or need not be informed about the past routing of an incoming downlink communication with data originating from the host computer 1516 to be forwarded (e.g., handed over) to a connected UE 1512. Similarly, the base station 1506 need not be aware of the future routing of an outgoing uplink communication originating from the UE 1512 towards the host computer 1516.

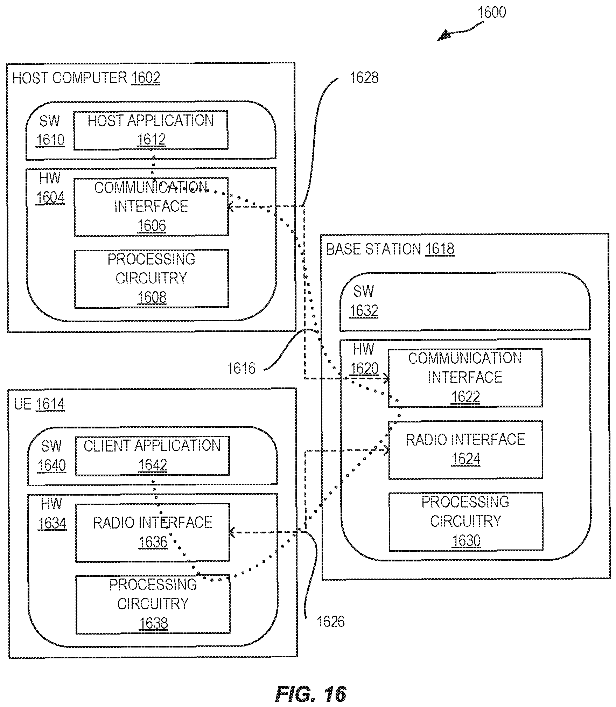

Example implementations, in accordance with an embodiment, of the UE, base station, and host computer discussed in the preceding paragraphs will now be described with reference to Figure 16. In a communication system 1600, a host computer 1602 comprises hardware 1604 including a communication interface 1606 configured to set up and maintain a wired or wireless connection with an interface of a different communication device of the communication system 1600. The host computer 1602 further comprises processing circuitry 1608, which may have storage and/or processing capabilities. In particular, the processing circuitry 1608 may comprise one or more programmable processors, ASICs, FPGAs, or combinations of these (not shown) adapted to execute instructions. The host computer 1602 further comprises software 1610, which is stored in or accessible by the host computer 1602 and executable by the processing circuitry 1608. The software 1610 includes a host application 1612. The host application 1612 may be operable to provide a service to a remote user, such as a UE 1614 connecting via an OTT connection 1616 terminating at the UE 1614 and the host computer 1602. In providing the service to the remote user, the host application 1612 may provide user data which is transmitted using the OTT connection 1616.

The communication system 1600 further includes a base station 1618 provided in a telecommunication system and comprising hardware 1620 enabling it to communicate with the host computer 1602 and with the UE 1614. The hardware 1620 may include a communication interface 1622 for setting up and maintaining a wired or wireless connection with an interface of a different communication device of the communication system 1600, as well as a radio interface 1624 for setting up and maintaining at least a wireless connection 1626 with the UE 1614 located in a coverage area (not shown in Figure 16) served by the base station 1618. The communication interface 1622 may be configured to facilitate a connection 1628 to the host computer 1602. The connection 1628 may be direct or it may pass through a core network (not shown in Figure 16) of the telecommunication system and/or through one or more intermediate networks outside the telecommunication system. In the embodiment shown, the hardware 1620 of the base station 1618 further includes processing circuitry 1630, which may comprise one or more programmable processors, ASICs, FPGAs, or combinations of these (not shown) adapted to execute instructions. The base station 1618 further has software 1632 stored internally or accessible via an external connection.

The communication system 1600 further includes the UE 1614 already referred to. The UE's 1614 hardware 1634 may include a radio interface 1636 configured to set up and maintain a wireless connection 1626 with a base station serving a coverage area in which the UE 1614 is currently located. The hardware 1634 of the UE 1614 further includes processing circuitry 1638, which may comprise one or more programmable processors, ASICs, FPGAs, or combinations of these (not shown) adapted to execute instructions. The UE 1614 further comprises software 1640, which is stored in or accessible by the UE 1614 and executable by the processing circuitry 1638. The software 1640 includes a client application 1642. The client application 1642 may be operable to provide a service to a human or non-human user via the UE 1614, with the support of the host computer 1602. In the host computer 1602, the executing host application 1612 may communicate with the executing client application 1642 via the OTT connection 1616 terminating at the UE 1614 and the host computer 1602. In providing the service to the user, the client application 1642 may receive request data from the host application 1612 and provide user data in response to the request data. The OTT connection 1616 may transfer both the request data and the user data. The client application 1642 may interact with the user to generate the user data that it provides.

It is noted that the host computer 1602, the base station 1618, and the UE 1614 illustrated in Figure 16 may be similar or identical to the host computer 1516, one of the base stations 1506A, 1506B, 1506C, and one of the UEs 1512, 1514 of Figure 15, respectively. This is to say, the inner workings of these entities may be as shown in Figure 16 and independently, the surrounding network topology may be that of Figure 15.

In Figure 16, the OTT connection 1616 has been drawn abstractly to illustrate the communication between the host computer 1602 and the UE 1614 via the base station 1618 without explicit reference to any intermediary devices and the precise routing of messages via these devices. The network infrastructure may determine the routing, which may be configured to hide from the UE 1614 or from the service provider operating the host computer 1602, or both. While the OTT connection 1616 is active, the network infrastructure may further take decisions by which it dynamically changes the routing (e.g., on the basis of load balancing consideration or reconfiguration of the network).

The wireless connection 1626 between the UE 1614 and the base station 1618 is in accordance with the teachings of the embodiments described throughout this disclosure. One or more of the various embodiments improve the performance of OTT services provided to the UE 1614 using the OTT connection 1616, in which the wireless connection 1626 forms the last segment. More precisely, the teachings of these embodiments may improve, e.g., data rate, latency, and/or power consumption and thereby provide benefits such as reduced user waiting time, relaxed restriction on file size, better responsiveness, extended battery lifetime, etc.

A measurement procedure may be provided for the purpose of monitoring data rate, latency, and other factors on which the one or more embodiments improve. There may further be an optional network functionality for reconfiguring the OTT connection 1616 between the host computer 1602 and the UE 1614, in response to variations in the measurement results. The measurement procedure and/or the network functionality for reconfiguring the OTT connection 1616 may be implemented in the software 1610 and the hardware 1604 of the host computer 1602 or in the software 1640 and the hardware 1634 of the UE 1614, or both. In some embodiments, sensors (not shown) may be deployed in or in association with communication devices through which the OTT connection 1616 passes; the sensors may participate in the measurement procedure by supplying values of the monitored quantities exemplified above, or supplying values of other physical quantities from which the software 1610, 1640 may compute or estimate the monitored quantities. The reconfiguring of the OTT connection 1616 may include message format, retransmission settings, preferred routing, etc.; the reconfiguring need not affect the base station 1618, and it may be unknown or imperceptible to the base station 1618. Such procedures and functionalities may be known and practiced in the art. In certain embodiments, measurements may involve proprietary UE signaling facilitating the host computer 1602's measurements of throughput, propagation times, latency, and the like. The measurements may be implemented in that the software 1610 and 1640 causes messages to be transmitted, in particular empty or 'dummy' messages, using the OTT connection 1616 while it monitors propagation times, errors, etc.

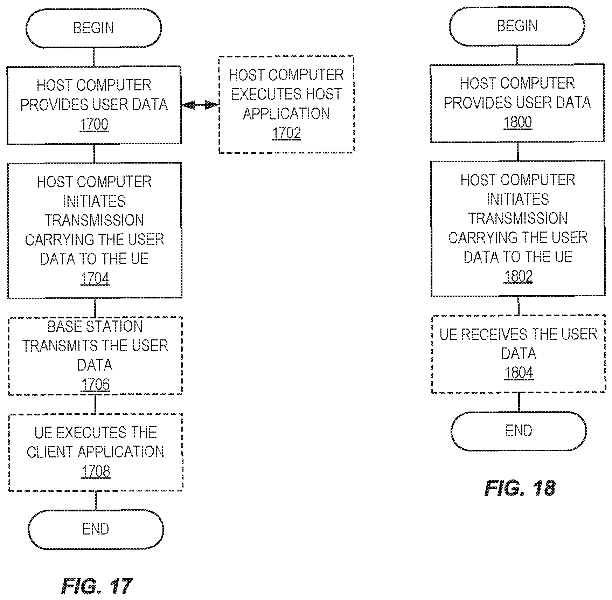

Figure 17 is a flowchart illustrating a method implemented in a communication system, in accordance with one embodiment. The communication system includes a host computer, a base station, and a UE which may be those described with reference to Figures 15 and 16. For simplicity of the present disclosure, only drawing references to Figure 17 will be included in this section. In step 1700, the host computer provides user data. In sub-step 1702 (which may be optional) of step 1700, the host computer provides the user data by executing a host application. In step 1704, the host computer initiates a transmission carrying the user data to the UE. In step 1706 (which may be optional), the base station transmits to the UE the user data which was carried in the transmission that the host computer initiated, in accordance with the teachings of the embodiments described throughout this disclosure. In step 1708 (which may also be optional), the UE executes a client application associated with the host application executed by the host computer.

Figure 18 is a flowchart illustrating a method implemented in a communication system, in accordance with one embodiment. The communication system includes a host computer, a base station, and a UE which may be those described with reference to Figures 15 and 16. For simplicity of the present disclosure, only drawing references to Figure 18 will be included in this section. In step 1800 of the method, the host computer provides user data. In an optional sub-step (not shown) the host computer provides the user data by executing a host application. In step 1802, the host computer initiates a transmission carrying the user data to the UE. The transmission may pass via the base station, in accordance with the teachings of the embodiments described throughout this disclosure. In step 1804 (which may be optional), the UE receives the user data carried in the transmission.

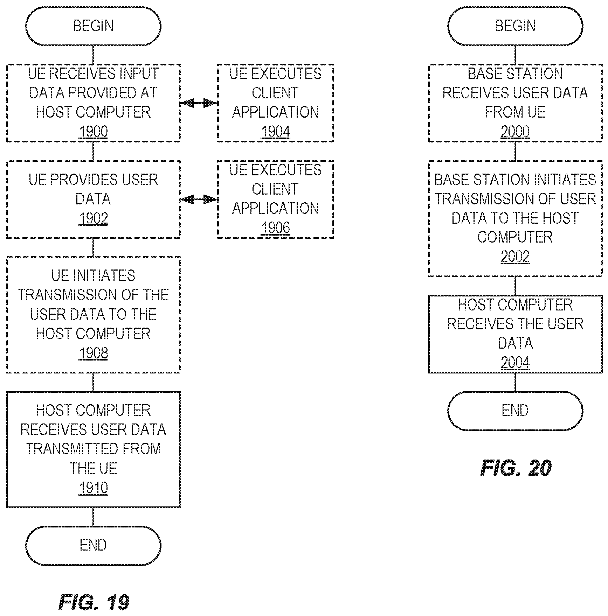

Figure 19 is a flowchart illustrating a method implemented in a communication system, in accordance with one embodiment. The communication system includes a host computer, a base station, and a UE which may be those described with reference to Figures 15 and 16. For simplicity of the present disclosure, only drawing references to Figure 19 will be included in this section. In step 1900 (which may be optional), the UE receives input data provided by the host computer. Additionally or alternatively, in step 1902(which may be optional), the UE provides user data. In sub-step 1904 (which may be optional) of step 1900, the UE provides the user data by executing a client application. In sub-step 1906 (which may be optional) of step 1902, the UE executes a client application which provides the user data in reaction to the received input data provided by the host computer. In providing the user data, the executed client application may further consider user input received from the user. Regardless of the specific manner in which the user data was provided, the UE initiates, in sub-step 1908 (which may be optional), transmission of the user data to the host computer. In step 1910 of the method, the host computer receives the user data transmitted from the UE, in accordance with the teachings of the embodiments described throughout this disclosure.

Figure 20 is a flowchart illustrating a method implemented in a communication system, in accordance with one embodiment. The communication system includes a host computer, a base station, and a UE which may be those described with reference to Figures 15 and 16. For simplicity of the present disclosure, only drawing references to Figure 20 will be included in this section. In step 2000 (which may be optional), in accordance with the teachings of the embodiments described throughout this disclosure, the base station receives user data from the UE. In step 2002 (which may be optional), the base station initiates transmission of the received user data to the host computer. In step 2004 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

Embodiments

## *Group A Embodiments*

1. A method performed by a wireless device for performing an uplink transmission, the method comprising:

- performing a time shift of an uplink frame timing with respect to a downlink frame time wherein the timing shift takes into account at least a part of the round trip delay; and
- performing an uplink transmission using the time shift of the uplink frame timing.

2. The method of embodiment 1 further comprising the step of determining the uplink data or control information transmission timing taking into account the round trip delay.

3. The method of any of embodiments 1 to 2 further comprising the step of receiving, from the network, a higher layer configuration parameter that represents the at least a part of the round trip delay.

4. The method of any of embodiments 1 to 3 wherein the wireless device determines the uplink transmission timing of HARQ-ACK jointly using the higher layer configuration parameter and a timing offset indicator received in the DCI that triggers the PDSCH corresponding to the HARQ-ACK transmission.

5. The method of embodiment 4 wherein the timing offset indicator is a PDSCH-to-HARQ-timing-indicator field.

6. The method of any of embodiments 1 to 5 wherein the wireless device determines the uplink transmission timing of HARQ-ACK jointly using the higher layer configuration parameter and a second higher layer configuration parameter.

7. The method of embodiment 6 wherein the second higher layer configuration parameter is a dl-DataToUL-ACK parameter.

8. The method of any of embodiments 1 to 7 wherein the wireless device determines the uplink transmission timing of aperiodic CSI on PUSCH jointly using the higher layer configuration parameter and a report slot offset indicator received in the DCI that triggers the aperiodic CSI on PUSCH.

9. The method of embodiment 8 wherein the report slot offset indicator indicates one of the values from a higher layer parameter *reportSlotOffsetList.*

10. The method of any of embodiments 1 to 9 wherein the wireless device determines the uplink transmission timing of data on PUSCH jointly using the higher layer configuration parameter and a report slot offset indicator received in the DCI that triggers the data transmission on PUSCH.

11. The method of any of embodiments 1 to 10 wherein the wireless device determines a reference uplink timing slot as the slot that has the most overlap with a downlink slot in which the DCI triggering data or control uplink transmission is received by the wireless device form the network node.

12. The method of any of embodiments 1 to 11 wherein the wireless device determines the uplink transmission timing of HARQ-ACK jointly using the determined reference uplink timing slot and a timing offset indicator received in the DCI that triggers the PDSCH corresponding to the HARQ-ACK transmission.

13. The method of embodiment 12 wherein the timing offset indicator is a PDSCH-to-HARQ-timing-indicator field.

14. The method of any of embodiments 1 to 13 wherein the wireless device determines the uplink transmission timing of HARQ-ACK jointly using the determined reference uplink timing slot and a second higher layer configuration parameter.

15. The method of embodiment 6 wherein the second higher layer configuration parameter is a dl-DataToUL-ACK parameter.

16. The method of any of embodiments 1 to 15 wherein the wireless device determines the uplink transmission timing of aperiodic CSI on PUSCH jointly using the determined reference uplink timing slot and a report slot offset indicator received in the DCI that triggers the aperiodic CSI on PUSCH.

17. The method of embodiment 16 wherein the report slot offset indicator indicates one of the values from a higher layer parameter *reportSlotOffsetList.*

18. The method of any of embodiments 1 to 17 wherein the wireless device determines the uplink transmission timing of data on PUSCH jointly using the determined reference uplink timing slot and a report slot offset indicator received in the DCI that triggers the data transmission on PUSCH.

19. The method of any of embodiments 1 to 18 wherein the round trip delay between the wireless device and a network node exceeds 2 ms.

20. The method of any of the previous embodiments, further comprising:

- providing user data; and
- forwarding the user data to a host computer via the transmission to the base station.

## Group B Embodiments

21. A method performed by a base station for receiving an uplink transmission, the method comprising:

- performing a time shift of its uplink frame timing with respect to its downlink frame time wherein the timing shift takes into account at least a part or the whole of the round trip delay; and
- performing an uplink transmission using the time shift of the uplink frame timing.

22. The method of embodiment 21 further comprising the step of determining the uplink data or control information transmission timing taking into account the round trip delay.

23. The method of any of embodiments 21 to 22 further comprising the step of transmitting, to the wireless device, a higher layer configuration parameter that represents the at least a part of the round trip delay.

24. The method of any of embodiments 21 to 23 wherein the base station determines the uplink transmission timing of HARQ-ACK jointly using the higher layer configuration parameter and a timing offset indicator received in the DCI that triggers the PDSCH corresponding to the HARQ-ACK transmission.

25. The method of embodiment 24 wherein the timing offset indicator is a PDSCH-to-HARQ-timing-indicator field.

26. The method of any of embodiments 21 to 25 wherein the base station determines the uplink transmission timing of HARQ-ACK jointly using the higher layer configuration parameter and a second higher layer configuration parameter.

27. The method of embodiment 26 wherein the second higher layer configuration parameter is a dl-DataToUL-ACK parameter.

28. The method of any of embodiments 21 to 27 wherein the base station determines the uplink transmission timing of aperiodic CSI on PUSCH jointly using the higher layer configuration parameter and a report slot offset indicator received in the DCI that triggers the aperiodic CSI on PUSCH.

29. The method of embodiment 28 wherein the report slot offset indicator indicates one of the values from a higher layer parameter *reportSlotOffsetList.*

30. The method of any of embodiments 21 to 29 wherein the base station determines the uplink transmission timing of data on PUSCH jointly using the higher layer configuration parameter and a report slot offset indicator received in the DCI that triggers the data transmission on PUSCH.

31. The method of any of embodiments 21 to 30 wherein the base station determines a reference uplink timing slot as the slot that has the most overlap with a downlink slot in which the DCI triggering data or control uplink transmission is received by the wireless device form the network node.

32. The method of any of embodiments 21 to 31 wherein the base station determines the uplink transmission timing of HARQ-ACK jointly using the determined reference uplink timing slot and a timing offset indicator received in the DCI that triggers the PDSCH corresponding to the HARQ-ACK transmission.

33. The method of embodiment 32 wherein the timing offset indicator is a PDSCH-to-HARQ-timing-indicator field.

34. The method of any of embodiments 21 to 33 wherein the base station determines the uplink transmission timing of HARQ-ACK jointly using the determined reference uplink timing slot and a second higher layer configuration parameter.

35. The method of embodiment 26 wherein the second higher layer configuration parameter is a dl-DataToUL-ACK parameter.

36. The method of any of embodiments 21 to 35 wherein the base station determines the uplink transmission timing of aperiodic CSI on PUSCH jointly using the determined reference uplink timing slot and a report slot offset indicator received in the DCI that triggers the aperiodic CSI on PUSCH.

37. The method of embodiment 36 wherein the report slot offset indicator indicates one of the values from a higher layer parameter *reportSlotOffsetList.*

38. The method of any of embodiments 21 to 37 wherein the base station determines the uplink transmission timing of data on PUSCH jointly using the determined reference uplink timing slot and a report slot offset indicator received in the DCI that triggers the data transmission on PUSCH.

39. The method of any of embodiments 1 to 18 wherein the round trip delay between the wireless device and a network node exceeds 2 ms.

40. The method of any of the previous embodiments, further comprising:

- obtaining user data; and
- forwarding the user data to a host computer or a wireless device.

*Group C Embodiments*

41. A wireless device for performing an uplink transmission, the wireless device comprising:

- processing circuitry configured to perform any of the steps of any of the Group A embodiments; and
- power supply circuitry configured to supply power to the wireless device.

42. A base station for receiving an uplink transmission, the base station comprising:

- processing circuitry configured to perform any of the steps of any of the Group B embodiments; and
- power supply circuitry configured to supply power to the base station.

43. A User Equipment, UE, for performing an uplink transmission, the UE comprising:

- an antenna configured to send and receive wireless signals;
- radio front-end circuitry connected to the antenna and to processing circuitry, and configured to condition signals communicated between the antenna and the processing circuitry;
- the processing circuitry being configured to perform any of the steps of any of the Group A embodiments;
- an input interface connected to the processing circuitry and configured to allow input of information into the UE to be processed by the processing circuitry;
- an output interface connected to the processing circuitry and configured to output information from the UE that has been processed by the processing circuitry; and
- a battery connected to the processing circuitry and configured to supply power to the UE.

44. A communication system including a host computer comprising:

- processing circuitry configured to provide user data; and
- a communication interface configured to forward the user data to a cellular network for transmission to a User Equipment, UE;
- wherein the cellular network comprises a base station having a radio interface and processing circuitry, the base station's processing circuitry configured to perform any of the steps of any of the Group B embodiments.

45. The communication system of the previous embodiment further including the base station.

46. The communication system of the previous 2 embodiments, further including the UE, wherein the UE is configured to communicate with the base station.

47. The communication system of the previous 3 embodiments, wherein:

- the processing circuitry of the host computer is configured to execute a host application, thereby providing the user data; and
- the UE comprises processing circuitry configured to execute a client application associated with the host application.

48. A method implemented in a communication system including a host computer, a base station, and a User Equipment, UE, the method comprising:

- at the host computer, providing user data; and
- at the host computer, initiating a transmission carrying the user data to the UE via a cellular network comprising the base station, wherein the base station performs any of the steps of any of the Group B embodiments.

49. The method of the previous embodiment, further comprising, at the base station, transmitting the user data.

50. The method of the previous 2 embodiments, wherein the user data is provided at the host computer by executing a host application, the method further comprising, at the UE, executing a client application associated with the host application.

51. A User Equipment, UE, configured to communicate with a base station, the UE comprising a radio interface and processing circuitry configured to perform the method of the previous 3 embodiments.

52. A communication system including a host computer comprising:

- processing circuitry configured to provide user data; and
- a communication interface configured to forward user data to a cellular network for transmission to a User Equipment, UE;
- wherein the UE comprises a radio interface and processing circuitry, the UE's components configured to perform any of the steps of any of the Group A embodiments.

53. The communication system of the previous embodiment, wherein the cellular network further includes a base station configured to communicate with the UE.

54. The communication system of the previous 2 embodiments, wherein:

- the processing circuitry of the host computer is configured to execute a host application, thereby providing the user data; and
- the UE's processing circuitry is configured to execute a client application associated with the host application.

55. A method implemented in a communication system including a host computer, a base station, and a User Equipment, UE, the method comprising:

- at the host computer, providing user data; and
- at the host computer, initiating a transmission carrying the user data to the UE via a cellular network comprising the base station, wherein the UE performs any of the steps of any of the Group A embodiments.

56. The method of the previous embodiment, further comprising at the UE, receiving the user data from the base station.

57. A communication system including a host computer comprising:

- communication interface configured to receive user data originating from a transmission from a User Equipment, UE, to a base station;
- wherein the UE comprises a radio interface and processing circuitry, the UE's processing circuitry configured to perform any of the steps of any of the Group A embodiments.

58. The communication system of the previous embodiment, further including the UE.

59. The communication system of the previous 2 embodiments, further including the base station, wherein the base station comprises a radio interface configured to communicate with the UE and a communication interface configured to forward to the host computer the user data carried by a transmission from the UE to the base station.

60. The communication system of the previous 3 embodiments, wherein:

- the processing circuitry of the host computer is configured to execute a host application; and
- the UE's processing circuitry is configured to execute a client application associated with the host application, thereby providing the user data.

61. The communication system of the previous 4 embodiments, wherein:

- the processing circuitry of the host computer is configured to execute a host application, thereby providing request data; and
- the UE's processing circuitry is configured to execute a client application associated with the host application, thereby providing the user data in response to the request data.

62. A method implemented in a communication system including a host computer, a base station, and a User Equipment, UE, the method comprising:

- at the host computer, receiving user data transmitted to the base station from the UE, wherein the UE performs any of the steps of any of the Group A embodiments.

63. The method of the previous embodiment, further comprising, at the UE, providing the user data to the base station.

64. The method of the previous 2 embodiments, further comprising:

- at the UE, executing a client application, thereby providing the user data to be transmitted; and
- at the host computer, executing a host application associated with the client application.

65. The method of the previous 3 embodiments, further comprising:

- at the UE, executing a client application; and
- at the UE, receiving input data to the client application, the input data being provided at the host computer by executing a host application associated with the client application;
- wherein the user data to be transmitted is provided by the client application in response to the input data.

66. A communication system including a host computer comprising a communication interface configured to receive user data originating from a transmission from a User Equipment, UE, to a base station, wherein the base station comprises a radio interface and processing circuitry, the base station's processing circuitry configured to perform any of the steps of any of the Group B embodiments.

67. The communication system of the previous embodiment further including the base station.

68. The communication system of the previous 2 embodiments, further including the UE, wherein the UE is configured to communicate with the base station.

69. The communication system of the previous 3 embodiments, wherein:

- the processing circuitry of the host computer is configured to execute a host application; and
- the UE is configured to execute a client application associated with the host application, thereby providing the user data to be received by the host computer.

70. A method implemented in a communication system including a host computer, a base station, and a User Equipment, UE, the method comprising:

- at the host computer, receiving, from the base station, user data originating from a transmission which the base station has received from the UE, wherein the UE performs any of the steps of any of the Group A embodiments.

71. The method of the previous embodiment, further comprising at the base station, receiving the user data from the UE.

72. The method of the previous 2 embodiments, further comprising at the base station, initiating a transmission of the received user data to the host computer.

At least some of the following abbreviations may be used in this disclosure. If there is an inconsistency between abbreviations, preference should be given to how it is used above. If listed multiple times below, the first listing should be preferred over any subsequent listing(s).

| | | |
|---|---|---|
| • | μs | Microsecond |
| • | 3GPP | Third Generation Partnership Project |
| • | 5G | Fifth Generation |
| • | ACK | Acknowledgement |
| • | AP | Access Point |
| • | ASIC | Application Specific Integrated Circuit |
| • | 5G | Fifth Generation |
| • | BS | Base Station |
| • | CP | Cyclic Prefix |
| • | CPU | Central Processing Unit |
| • | CSI | Channel State Information |
| • | CSI-RS | Channel State Information Reference Signal |

(continued)

| | | |
|---|---|---|
| • | DCI | Downlink Channel Information |
| • | DL | Downlink |
| • | DSP | Digital Signal Processor |
| • | eNB | Enhanced or Evolved Node B |
| • | FDD | Frequency Division Duplexing |
| • | FPGA | Field Programmable Gate Array |
| • | FR | Frequency Range |
| • | GEO | Geostationary Orbit |
| • | GHz | Gigahertz |
| • | gNB | New Radio Base Station |
| • | HARQ | Hybrid Automatic Repeat Request |
| • | IoT | Internet of Things |
| • | LEO | Low Earth Orbit |
| • | LTE | Long Term Evolution |
| • | MEO | Medium Earth Orbit |
| • | MME | Mobility Management Entity |
| • | MTC | Machine Type Communication |
| • | NGSO | Non-Geostationary Satellite Orbit |
| • | NR | New Radio |
| • | OFDM | Orthogonal Frequency Division Multiplexing |
| • | OTT | Over-the-Top |
| • | PBCH | Physical Broadcast Channel |
| • | PDSCH | Physical Downlink Shared Channel |
| • | P-GW | Packet Data Network Gateway |
| • | PSS | Primary Synchronization Signal |
| • | PUCCH | Physical Uplink Control Channel |
| • | PUSCH | Physical Uplink Shared Channel |
| • | RAM | Random Access Memory |
| • | RAN | Radio Access Network |
| • | RAT | Radio Access Technology |
| • | ROM | Read Only Memory |
| • | RRC | Radio Resource Control |
| • | RS | Reference Signal |
| • | SCEF | Service Capability Exposure Function |
| • | SLIV | Start and Length Indicator |
| • | S-GW | Serving Gateway |
| • | SPS | Semi-Persistent Scheduling |
| • | SR | Scheduling Request |
| • | SRS | Sounding Reference Signal |
| • | SS | Synchronization Signal |
| • | SSB | Synchronization Signal Block |
| • | SSS | Secondary Synchronization Signal |
| • | TA | Timing Alignment |
| • | TDD | Time Division Duplexing |
| • | UCI | Uplink Control Information |
| • | UE | User Equipment |
| • | UL | Uplink |

Those skilled in the art will recognize improvements and modifications to the embodiments of the present disclosure. All such improvements and modifications are considered within the scope of the concepts disclosed herein. The following examples are also encompassed by the present disclosure and may fully or partly be incorporated into embodiments.

1. A method of operation of a wireless device in a cellular communications network, comprising:

receiving a transmission, from a network node, in a downlink slot;
determining a reference uplink slot index in an uplink frame timing of the wireless device where the reference uplink slot index corresponds to the downlink slot in which the transmission was received; and
transmitting an uplink transmission in response to the received transmission in an uplink slot a number of slots, K, after the determined reference uplink slot index.

2. The method of example 1 wherein determining the reference uplink slot index comprises, when a boundary of the downlink slot is aligned with an uplink slot, determining the reference uplink slot index to be an index of that uplink slot.

3. The method of any of examples 1 to 2 wherein determining the reference uplink slot index comprises, when the boundary of the downlink slot is partially aligned with a first uplink slot and a second uplink slot, determining the reference uplink slot index to be an index of the second uplink slot.

4. The method of any of examples 1 to 2 wherein determining the reference uplink slot index comprises, when the boundary of the downlink slot is partially aligned with a first uplink slot and a second uplink slot, determining the reference uplink slot index to be an index of the first uplink slot.

5. The method of any of examples 1 to 2 wherein determining the reference uplink slot index comprises, when the boundary of the downlink slot is partially aligned with a first uplink slot and a second uplink slot, determining the reference uplink slot index to be an index of whichever of the first uplink slot and the second uplink slot has more overlap with the downlink slot.

6. The method of any of examples 1 to 5 wherein receiving the transmission comprises receiving a Physical Downlink Shared Channel, PDSCH, transmission and transmitting the uplink transmission comprises transmitting a Hybrid Automatic Repeat Request, HARQ, response to the PDSCH transmission.

7. The method of any of examples 1 to 6 wherein the number of slots, K, is received from a control message from the network node.

8. The method of any of examples 1 to 7 wherein the network node is a New Radio, NR, gNB.

9. The method of any of examples 1 to 8 wherein the wireless device is a New Radio, NR, User Equipment, UE.

10. A method of operation of a network node in a cellular communications network, comprising:

transmitting a transmission, to a wireless device, in a downlink slot; and
receiving an uplink transmission in response to the transmission in an uplink slot a number of slots, K, after a reference uplink slot index where the reference uplink slot index in an uplink frame timing of the wireless device corresponds to the downlink slot in which the transmission was received by the wireless device.

11. The method of example 10 wherein, when a boundary of the downlink slot is aligned with an uplink slot, the reference uplink slot index is an index of that uplink slot.

12. The method of any of examples 10 to 11 wherein, when the boundary of the downlink slot is partially aligned with a first uplink slot and a second uplink slot, the reference uplink slot index is an index of the second uplink slot.

13. The method of any of examples 10 to 12 wherein, when the boundary of the downlink slot is partially aligned with a first uplink slot and a second uplink slot, the reference uplink slot index is an index of the first uplink slot.

14. The method of any of examples 10 to 11 wherein, when the boundary of the downlink slot is partially aligned with a first uplink slot and a second uplink slot, the reference uplink slot index is an index of whichever of the first uplink slot and the second uplink slot has more overlap with the downlink slot.

15. The method of any of examples 10 to 14 wherein transmitting the transmission comprises transmitting a Physical Downlink Shared Channel, PDSCH, transmission and receiving the uplink transmission comprises receiving a Hybrid Automatic Repeat Request, HARQ, response to the PDSCH transmission.

16. The method of any of examples 10 to 15 wherein the number of slots, K, is transmitted from the network node as a control message.

17. The method of any of examples 10 to 16 wherein the network node is a New Radio, NR, gNB.

18. The method of any of examples 10 to 17 wherein the wireless device is a New Radio, NR, User Equipment, UE.

19. A wireless device in a cellular communications network, comprising:

    at least one transmitter;
    at least one receiver;
    at least one processor; and
    memory storing software instructions executable by the at least one processor whereby the wireless device is operative to:

        receive a transmission from a network node in a downlink slot;
        determine a reference uplink slot index in an uplink frame timing of the wireless device where the reference uplink slot index corresponds to the downlink slot in which the transmission was received; and
        transmit an uplink transmission in response to the received transmission in an uplink slot a number of slots, K, after the determined reference uplink slot index.

20. A network node in a cellular communications network, comprising:

    at least one transmitter;
    at least one receiver;
    at least one processor; and
    memory storing software instructions executable by the at least one processor whereby the network node is operative to:

        transmit a transmission to a wireless device in a downlink slot; and
        receive an uplink transmission in response to the transmission in an uplink slot a number of slots, K, after a reference uplink slot index where the reference uplink slot index in an uplink frame timing of the wireless device corresponds to the downlink slot in which the transmission was received by the wireless device.

21. A wireless device in a cellular communications network adapted to operate according to the method of any one of examples 1 to 9.

22. A network node in a cellular communications network adapted to operate according to the method of any one of examples 10 to 18.

23. A method of operation of a wireless device in a cellular communications network, comprising:

    receiving a transmission from a network node in a downlink slot;
    performing a time shift of an uplink frame timing with respect to a downlink frame time wherein the time shift takes into account at least a part of a round trip delay; and
    performing an uplink transmission using the time shift of the uplink frame timing.

24. The method of example 23 wherein the uplink frame timing at the wireless device is time advanced from the downlink frame time at the wireless device by an offset value in addition to a timing advance.

25. The method of any of examples 23 to 24 wherein the downlink frame time and the uplink frame timing at the network node are time aligned.

26. The method of any of examples 23 to 25 further comprising receiving the offset value, from the network node, which, optionally, consists of at least one of the group consisting of: a one-way delay, a round-trip delay, the one-way delay quantized to the closest number of slots, and the round-trip delay quantized to the closest number of slots.

27. The method of any of examples 23 to 26 further comprising receiving a broadcast, from the network node, indicating the offset value which, optionally, consists of a common round-trip delay.

**Claims**

1. A method of operation of a wireless device in a cellular communications network, comprising:

   receiving a transmission, from a network node, in a downlink slot;
   determining a reference uplink slot index in an uplink frame timing of the wireless device where the reference uplink slot index corresponds to the downlink slot in a downlink frame timing in which the transmission was received; and
   transmitting an uplink transmission in response to the received transmission in an uplink slot a number of slots, K, after the determined reference uplink slot index.

2. The method of claim 1 wherein determining the reference uplink slot index comprises, when a boundary of the downlink slot is aligned with an uplink slot, determining the reference uplink slot index to be an index of that uplink slot.

3. The method of any of claims 1 to 2 wherein determining the reference uplink slot index comprises, when the boundary of the downlink slot is partially aligned with a first uplink slot and a second uplink slot, determining the reference uplink slot index to be an index of the second uplink slot.

4. The method of any of claims 1 to 2 wherein determining the reference uplink slot index comprises, when the boundary of the downlink slot is partially aligned with a first uplink slot and a second uplink slot, determining the reference uplink slot index to be an index of the first uplink slot.

5. The method of any of claims 1 to 2 wherein determining the reference uplink slot index comprises, when the boundary of the downlink slot is partially aligned with a first uplink slot and a second uplink slot, determining the reference uplink slot index to be an index of whichever of the first uplink slot and the second uplink slot has more overlap with the downlink slot.

6. The method of any of claims 1 to 5 wherein receiving the transmission comprises receiving a Physical Downlink Shared Channel, PDSCH, transmission and transmitting the uplink transmission comprises transmitting a Hybrid Automatic Repeat Request, HARQ, response to the PDSCH transmission.

7. The method of any of claims 1 to 6 wherein the number of slots, K, is received from a control message from the network node.

8. The method of any of claims 1 to 7 wherein the network node is a New Radio, NR, gNB and/or wherein the wireless device is a New Radio, NR, User Equipment, UE.

9. A method of operation of a network node in a cellular communications network, comprising:

   transmitting a transmission, to a wireless device, in a downlink slot; and
   receiving an uplink transmission in response to the transmission in an uplink slot a number of slots, K, after a reference uplink slot index where the reference uplink slot index in an uplink frame timing of the wireless device corresponds to the downlink slot in a downlink frame timing in which the transmission was received by the wireless device.

10. The method of claim 9 wherein, when a boundary of the downlink slot is aligned with an uplink slot, the reference uplink slot index is an index of that uplink slot.

11. The method of any of claims 9 to 10 wherein, when the boundary of the downlink slot is partially aligned with a first uplink slot and a second uplink slot, the reference uplink slot index is an index of the second uplink slot and/or wherein, when the boundary of the downlink slot is partially aligned with a first uplink slot and a second uplink slot, the reference uplink slot index is an index of the first uplink slot.

12. The method of any of claims 9 to 10 wherein, when the boundary of the downlink slot is partially aligned with a first uplink slot and a second uplink slot, the reference uplink slot index is an index of whichever of the first uplink slot and the second uplink slot has more overlap with the downlink slot.

13. The method of any of claims 9 to 12 wherein transmitting the transmission comprises transmitting a Physical Downlink Shared Channel, PDSCH, transmission and receiving the uplink transmission comprises receiving a Hybrid Automatic Repeat Request, HARQ, response to the PDSCH transmission and/or

   wherein the number of slots, K, is transmitted from the network node as a control message and/or
   wherein the network node is a New Radio, NR, gNB and/or
   wherein the wireless device is a New Radio, NR, User Equipment, UE.

14. A wireless device in a cellular communications network adapted to operate according to the method of any one of claims 1 to 9.

15. A network node in a cellular communications network adapted to operate according to the method of any one of claims 9 to 13.

*FIG. 1*

EP 4 769 989 A2

**FIG. 2**

DOWNLINK FRAME $i$

UPLINK FRAME $i$

$(N_{TA} + N_{TA,offset})T_C$

**FIG. 3**

SYNCHRONIZATION SIGNAL BURSTS SERIES

SYNCHRONIZATION SIGNAL BLOCK

SYNCHRONIZATION SIGNAL BURST

DURATION OF SYNCHRONIZATION SIGNAL BURST

PERIODICITY OF SYNCHRONIZATION SIGNAL BURST

TIME

*FIG. 4*

EP 4 769 989 A2

*FIG. 5*

gNB DL

| | ... | $n$ | ... | | ... | | |

UE DETECTS DL DCI
SCHEDULING PDSCH
RECEPTION

$X_{delay}$

UE DL

| | ... | $n$ | ... | $n + k$ | ... |

$(N_{TA} + N_{TA,offset})T_C + 2X_{delay}$

UE TRANSMITS HARQ-ACK

UE UL

| $n$ | ... | | ... | | ... | $n + X^{slots}_{delay} + k$ | |

gNB UL

| | ... | $n$ | ... | | ... | | |

**FIG. 6**

gNB DL

| | ... | $n$ | ... | | ... | | |

UE DETECTS DCI
TRIGGERING APERIODIC CSI
ON PUSCH

$X_{delay}$

UE DL

| | ... | $n$ | ... | $n+k$ | ... |

$(N_{TA} + N_{TA,offset})T_C + 2X_{delay}$

APERIODIC CSI ON PUSCH

UE UL

| $n$ | ... | | ... | | ... | $n + X^{slots}_{delay} + k$ | |

gNB UL

| | ... | $n$ | ... | | ... | | |

**FIG. 7**

UE DETECTS DCI
TRIGGERING APERIODIC CSI
ON PUSCH

| UE DL | | ... | $n$ | ... | ... | $n+k$ | |

$(N_{TA} + N_{TA,offset})T_C + 2X_{delay}$

APERIODIC CSI ON PUSCH

| UE UL | | ... | | ... | $m$ | $m+1$ | ... | $m'+K$ |

REFERENCE UPLINK SLOT $m' = m$

*FIG. 8*

EP 4 769 989 A2

UE DETECTS DL DCI
SCHEDULING PDSCH
RECEPTION

UE DL

| | ... | $n$ | ... | ... | $n + k$ | |

$(N_{TA} + N_{TA,offset})T_C + 2X_{delay}$

UE TRANSMITS HARQ-ACK

UE UL

| | ... | | $m$ | $m + 1$ | | ... | $m' + K$ |

REFERENCE UPLINK SLOT $m' = m + 1$

*FIG. 9*

1000

1016

CONTROL SYSTEM
1002

NETWORK INTERFACE
1008

PROCESSOR(S)
1004

RADIO UNIT(S)
1010

1016

TX(S) 1012

MEMORY
1006

RX(S) 1014

*FIG. 10*

RADIO ACCESS NODE
1000

MODULE(S)
1200

*FIG. 12*

*FIG. 11*

1300

1312

TRANSCEIVER(S)
1306

1312

| MEMORY 1304 | ←→ | PROCESSOR(S) 1302 | ←→ | TRANSCEIVER(S) 1306 |
|---|---|---|---|---|
| | | | | TX(S) 1308 |
| | | | | RX(S) 1310 |

**FIG. 13**

UE
1300

MODULE(S)
1400

**FIG. 14**

**FIG. 15**

FIG. 16

BEGIN

HOST COMPUTER
PROVIDES USER DATA
1700

HOST COMPUTER
EXECUTES HOST
APPLICATION
1702

HOST COMPUTER
INITIATES
TRANSMISSION
CARRYING THE USER
DATA TO THE UE
1704

BASE STATION
TRANSMITS THE USER
DATA
1706

UE EXECUTES THE
CLIENT APPLICATION
1708

END

**FIG. 17**

BEGIN

HOST COMPUTER
PROVIDES USER DATA
1800

HOST COMPUTER
INITIATES
TRANSMISSION
CARRYING THE USER
DATA TO THE UE
1802

UE RECEIVES THE USER
DATA
1804

END

**FIG. 18**

BEGIN

UE RECEIVES INPUT
DATA PROVIDED AT
HOST COMPUTER
1900

UE EXECUTES
CLIENT
APPLICATION
1904

UE PROVIDES USER
DATA
1902

UE EXECUTES
CLIENT
APPLICATION
1906

UE INITIATES
TRANSMISSION OF THE
USER DATA TO THE
HOST COMPUTER
1908

HOST COMPUTER
RECEIVES USER DATA
TRANSMITTED FROM
THE UE
1910

END

*FIG. 19*

BEGIN

BASE STATION
RECEIVES USER DATA
FROM UE
2000

BASE STATION INITIATES
TRANSMISSION OF USER
DATA TO THE HOST
COMPUTER
2002

HOST COMPUTER
RECEIVES THE USER
DATA
2004

END

*FIG. 20*

## REFERENCES CITED IN THE DESCRIPTION

### Patent documents cited in the description

- WO 62717536 A

### Non-patent literature cited in the description

- *3GPP TR 38.811 V1.0.0*, June 2018
- *3GPP TS 38.211 V15.2.0*, June 2018
- *3GPP TS 38.211 V15.2.0*
- NR Physical Channels and Modulation. *3GPP TS 38.211 V15.2.0*, June 2018
- *3GPP TS 38.104 V15.2.0*, June 2018
- *3GPP TS 38.133 V15.2.0*, June 2018
- *3GPP TS 38.213 V15.2.0*, June 2018
- *3GPP TS 38.331 V15.2.1*, June 2018
- *3GPP TS 38.214 V15.2.X*, June 2018
- NR Physical layer procedures for data. *3GPP TS 38.214 V15.2.X*, June 2018
- NR Radio Resource Control (RRC) protocol specification. *3GPP TS 38.331 V15.2.1*, June 2018